(19) Europäisches Patentamt
European Patent Office
Office européen des brevets

(11) EP 2 672 433 A1

(12) **EUROPEAN PATENT APPLICATION**
published in accordance with Art. 153(4) EPC

(43) Date of publication:
11.12.2013 Bulletin 2013/50

(51) Int Cl.:
G06Q 10/00 (2012.01)      H04W 4/02 (2009.01)
H04W 60/00 (2009.01)

(21) Application number: 12741963.8

(22) Date of filing: 24.01.2012

(86) International application number:
PCT/JP2012/051455

(87) International publication number:
WO 2012/105377 (09.08.2012 Gazette 2012/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.01.2011   JP 2011018860

(71) Applicant: NTT DOCOMO, INC.
Chiyoda-ku
Tokyo 100-6150 (JP)

(72) Inventors:
• TERADA, Masayuki
Tokyo 100-6150 (JP)
• KOBAYASHI, Motonari
Tokyo 100-6150 (JP)
• ODAWARA, Toru
Tokyo 100-6150 (JP)
• OKAJIMA, Ichiro
Tokyo 100-6150 (JP)

(74) Representative: Viering, Jentschura & Partner
Am Brauhaus 8
01099 Dresden (DE)

(54) **TERMINAL-COUNT ESTIMATION DEVICE AND TERMINAL-COUNT ESTIMATION METHOD**

(57) A number-of-terminals estimation device (10) includes: a location data acquisition unit (11) to acquire location data which are a collection of multiple pieces of location information including location registration information; a first presence count estimation unit (15) to estimate a first presence count to be the number of terminals in observation area during observation period, based on the location data; a signal removal unit (16) to extract location data in accordance with a type of location data from the location data; a second presence count estimation unit (17) to estimate a second presence count to be the number of terminals in observation area during observation period, based on extracted location data; and a third presence count estimation unit (18) to estimate a third presence count to be the number of terminals in observation area during observation period, based on one or both of first and second presence counts.

*Fig.2*

EP 2 672 433 A1

## Description

### Technical Field

The present invention relates to a number-of-terminals estimation device and a number-of-terminals estimation method to estimate the number of terminals located in a certain area, using location data about mobile terminals obtained from network facilities of the mobile terminals (e.g., cell phones). The "location data" in the present specification is a collection of a plurality of pieces of location information including location registration information and may further include location information (e.g., GPS positioning information or the like) except for the location registration information.

### Background Art

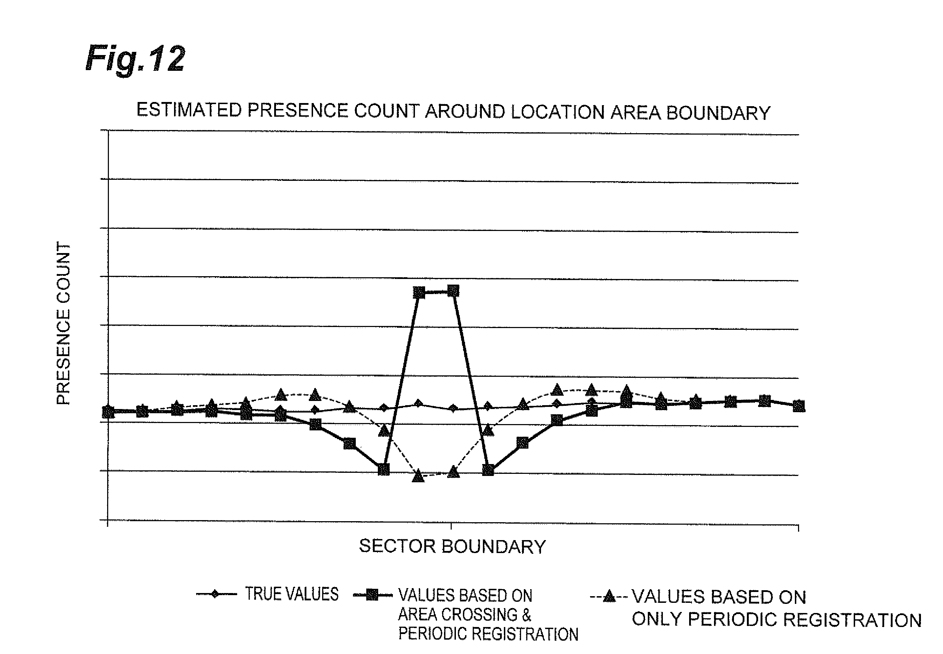

There is a conventionally known technology to estimate the number of terminals located in a certain area (e.g., a sector) (the number of terminals is so called a presence count), based on the number of location registration information generated. However, as well as being generated at a predetermined location registration period, the location registration information is also generated when a user of a terminal moves to another location area across a boundary between location areas (which will be referred to hereinafter as "LA boundary"). Therefore, in a sector facing an LA boundary, a probability of generation of location registration information becomes relatively higher than that in the other sectors, which poses a risk of overestimating the presence count in the sector facing the LA boundary. Fig. 12 is a conceptual diagram showing a relationship between estimated presence counts around an LA boundary (on the vertical axis) and distances from the LA boundary (on the horizontal axis), and it is clear from a graph of a thick solid line about estimated presence counts based on the conventional technique plotted by square marks and a graph of a thin solid line about true values (true estimated presence counts) plotted by diamond-like marks in the diagram that the estimated presence counts based on the conventional technique are relatively larger than the true values, near the center of the horizontal axis (the LA boundary) in Fig. 12.

Patent Literature 1 below proposes a correction for the presence count in the sector facing the LA boundary, in view of the overestimation of the presence count in the sector facing the LA boundary.

### Citation List

### Patent Literature

    Patent Literature 1: WO2010/116903A1

### Summary of Invention

### Technical Problem

In the meantime, the location registration period is reset to zero when a terminal user crosses a location registration area boundary. For this reason, the probability of generation of location registration information becomes relatively lower in sectors at some distance from the LA boundary (e.g., in sectors adjacent inside to the sector facing the LA boundary), which poses a risk of underestimating the presence count in the sectors at some distance from the LA boundary. At locations a little away from the region near the center of the horizontal axis (LA boundary) in Fig. 12 described above, the estimated presence counts based on the conventional technique are relatively smaller than the true values.

However, Patent Literature 1 fails to clearly show a specific technique for solving the above problem, and there is a room for improvement to achieve more accurate estimation of the presence count.

The present invention has been accomplished in order to solve the above problem and it is an object of the present invention to realize more accurate estimation of the presence count.

### Solution to Problem

A number-of-terminals estimation device according to an aspect of the present invention is one comprising: a location data acquisition unit for acquiring location data which are a collection of multiple pieces of location information including location registration information; a first presence count estimation unit for estimating the number of terminals located in an observation area during an observation period, as a first presence count, based on the location data acquired by the location data acquisition unit; an extraction unit for extracting location data in accordance with a type of location data, from the location data acquired by the location data acquisition unit; a second presence count estimation unit for estimating the number of terminals located in the observation area during the observation period, as a second presence count, based on the extracted location data; and a third presence count estimation unit for estimating the number of terminals located in the observation area during the observation period, as a third presence count, based on one or both of the first presence count obtained by the first presence count estimation unit and the second presence count obtained by the second presence count estimation unit. Since the number-of-terminals estimation device of this configuration is configured to estimate the number of terminals as the third presence count, based on one or both of the first presence count based on the location data as the collection of multiple pieces of location information including the location registration information and the second presence count based on the location data extracted in accordance with the type of location data, it is able to more accurately estimate the third presence count to be the number of terminals corresponding to somewhere in a numerical range between the first presence count and the second presence count (inclusive of the numerals at the two ends). The third presence count estimation unit may estimate an error of the number of terminals caused by a crossing of a terminal across a location registration area boundary, based on the first presence count and the second presence count.

A number-of-terminals estimation device according to another aspect of the present invention is one comprising: a location data acquisition unit for acquiring location data which are a collection of multiple pieces of location information including location registration information; a first presence count estimation unit for estimating the number of terminals located in an observation area during an observation period, as a first presence count, based on the location data acquired by the location data acquisition unit; a signal removal unit for removing location registration information generated due to a crossing of a terminal across a location registration area boundary, from the location data acquired by the location data acquisition unit, to obtain location data after removal; a second presence count estimation unit for estimating the number of terminals located in the observation area during the observation period, as a second presence count, based on the location data after removal obtained by the signal removal unit; and a third presence count estimation unit for estimating the number of terminals located in the observation area during the observation period, as a third presence count, based on one or both of the first presence count obtained by the first presence count estimation unit and the second presence count obtained by the second presence count estimation unit. In this case, the third presence count estimation unit may estimate an error of the number of terminals caused by the crossing of the terminal across the location registration area boundary, based on the first presence count and the second presence count.

In the foregoing number-of-terminals estimation device, the third presence count estimation unit may estimate the third presence count by switching the presence count as a basis of estimation for each observation area, among the first presence count only, the second presence count only, and, both of the first and second presence counts.

Since the number-of-terminals estimation device of this configuration is configured to estimate the number of terminals as the third presence count, based on one or both of the first presence count based on the location data as the collection of multiple pieces of location information including the location registration information and the second presence count based on the location data after removal of the location registration information generated due to the crossing of the terminal across the location registration area boundary, it is able to estimate the third presence count to be the number of terminals corresponding to somewhere in the numerical range between the first presence count and the second presence count (inclusive of the numerals at the two ends). This solves the problem that the presence count is overestimated near the location registration area boundary and the presence count is underestimated at the locations a little away from the location registration area boundary, thus allowing more accurate estimation of the presence count.

A technique of estimating the third presence count can be adopted from a variety of modes. For example, the third presence count estimation unit may estimate, as the third presence count, the number of terminals corresponding to a predetermined proportional division point between the first presence count and the second presence count. The proportional division point herein may be an exact center point between the first presence count and the second presence count, a point of trisection of the numerical range between the first presence count and the second presence count that is closer to the second presence count, or any proportional division point except for these. Furthermore, the third presence count estimation unit may estimate the third presence count as follows: when the first presence count is not less than the second presence count, the third presence count estimation unit estimates the third presence count to be the number of terminals corresponding to a predetermined proportional division point between the first presence count and the second presence count; when the first presence count is less than the second presence count, the third presence count estimation unit estimates the third presence count to be the second presence count.

Furthermore, a technique of estimating the first and second presence counts can also be adopted from a variety of modes. For example, the device may be configured as follows: the location data includes identification information to identify a terminal and location acquisition time information when the location information is acquired, associated with each piece of location information; and both or one of the first presence count estimation unit and the second presence count estimation unit includes: a preceding and following location data acquisition unit for, concerning a target location data, acquiring location acquisition time information of location data immediately preceding the target location data and location acquisition time information of location data immediately following the target location data, out of location data including the same identification information as the target location data; a feature amount calculation unit for calculating a feature amount on the target location data, based on at least two of the location acquisition time information of the immediately-preceding location data, the location acquisition time information of the target location data, and the location acquisition time information of the immediately-following location data; an observation target acquisition unit for acquiring, as observation target location data, one or more pieces of location data including location acquisition time information after an observation start time and before an observation end time about an observation period to be observed and including location information associated with observation area information about an observation area to be observed; and a number-of-terminals estimation unit for estimating the number of terminals located in the observation area during the observation period, based on the feature amount on the observation target location data and a length of the observation period being a difference between the observation start time and the observation end time.

Incidentally, the feature amount calculation unit may operate as follows: the feature amount calculation unit makes a determination on whether or not the target location data includes location registration information generated due to a crossing across a location registration area boundary and a determination on whether or not the immediately-following location data includes location registration information generated due to a crossing across a location registration area boundary; the feature amount calculation unit calculates the feature amount on the target location data, using at least two of the location acquisition time information of the target location data, the location acquisition time information of the immediately-preceding location data, and the location acquisition time information of the immediately-following location data, according to the result of the determination on whether or not the target location data includes location registration information generated due to a crossing across a location registration area boundary and the result of the determination on whether or not the immediately-following location data includes location registration information generated due to a crossing across a location registration area boundary. In this case, although the detailed principle will be described later, a highly accurate feature amount can be obtained with consideration to the property of generation timing about the location registration information generated due to the crossing across the location registration area boundary. It is noted that "location registration information generated due to a crossing across a location registration area boundary" means location registration information generated due to a crossing of a mobile terminal across a location registration area boundary

More specifically, the feature amount calculation unit may operate as follows: when the target location data includes the location registration information generated due to the crossing across the location registration area boundary, the feature amount calculation unit sets a location acquisition time of the target location data to a first variable; when the target location data does not include the location registration information generated due to the crossing across the location registration area boundary, the feature amount calculation unit sets a midpoint time between the location acquisition time of the target location data and the location acquisition time of the immediately-preceding location data to the first variable; when the immediately-following location data includes the location registration information generated due to the crossing across the location registration area boundary, the feature amount calculation unit sets a location acquisition time of the immediately-following location data to a second variable; when the immediately-following location data does not include the location registration information generated due to the crossing across the location registration area boundary, the feature amount calculation unit sets a midpoint time between the location acquisition time of the target location data and the location acquisition time of the immediately-following location data to the second variable; and the feature amount calculation unit calculates the feature amount on the target location data, based on a difference between the first variable and the second variable set.

The feature amount calculation unit may operate as follows: when a difference between the location acquisition time of the target location data and the first variable is larger than a predetermined value, the feature amount calculation unit calculates the feature amount on the target location data, using as the first variable, a time set backward by a predetermined time from the location acquisition time of the target location data. Similarly, when a difference between the location acquisition time of the target location data and the second variable is larger than a predetermined value, the feature amount calculation unit may calculate the feature amount on the target location data, using as the second variable, a time set forward by a predetermined time from the location acquisition time of the target location data. As the feature amount calculation unit is made to operate as described above, when an acquisition time interval of location data becomes abnormally long because of the mobile terminal being located in an out-of-service area or because of the mobile terminal being in a power-off mode, it is feasible to prevent the abnormally long acquisition time interval from excessively affecting the calculation result.

The number-of-terminals estimation device may further comprise a population estimation unit for estimating a population in the observation area during the observation period, based on the third presence count obtained by the third presence count estimation unit and a ratio of a presence count and a population in a predetermined area. In this case, the population in the observation area during the observation period can be estimated more accurately. The population may be estimated by obtaining a ratio of a presence count and a population in the entire country during the observation period or a certain constant. Furthermore, a predetermined ratio may be used instead of the observation period. When (population/presence count) is adopted as the aforementioned ratio of presence count and population, this ratio is also called "scaling factor." This scaling factor may be derived using the number of terminals (presence count) estimated based on the feature amount and the observation period length and a method of deriving it will be described later. The number-of-terminals estimation device may further comprise: an observation period acquisition unit for acquiring observation period information including a set of an observation start time and an observation end time; and an observation area acquisition unit for acquiring observation area information associated with one or more pieces of location information.

The invention of the above-described number-of-terminals estimation devices can also be regarded as the invention of number-of-terminals estimation methods executed by the number-of-terminals estimation devices, with the same operation and effect.

Namely, a number-of-terminals estimation method according to an aspect of the present invention is a number-of-terminals estimation method executed by a number-of-terminals estimation device, comprising: a location data acquisition step of acquiring location data which are a collection of multiple pieces of location information including location registration information; a first presence count estimation step of estimating the number of terminals located in an observation area during an observation period, as a first presence count, based on the location data acquired in the location data acquisition step; an extraction step of extracting location data in accordance with a type of location data, from the location data acquired in the location data acquisition step; a second presence count estimation step of estimating the number of terminals located in the observation area during the observation period, as a second presence count, based on the extracted location data; and a third presence count estimation step of estimating the number of terminals located in the observation area during the observation period, as a third presence count, based on one or both of the first presence count acquired in the first presence count estimation step and the second presence count acquired in the second presence count estimation step.

A number-of-terminals estimation method according to another aspect of the present invention is a number-of-terminals estimation method executed by a number-of-terminals estimation device, comprising: a location data acquisition step of acquiring location data which are a collection of multiple pieces of location information including location registration information; a first presence count estimation step of estimating the number of terminals located in an observation area during an observation period, as a first presence count, based on the location data acquired in the location data acquisition step; a signal removal step of removing location registration information generated due to a crossing of a terminal across a location registration area boundary, from the location data acquired in the location data acquisition step, to obtain location data after removal; a second presence count estimation step of estimating the number of terminals located in the observation area during the observation period, as a second presence count, based on the location data after removal obtained in the signal removal step; and a third presence count estimation step of estimating the number of terminals located in the observation area during the observation period, as a third presence count, based on one or both of the first presence count acquired in the first presence count estimation step and the second presence count acquired in the second presence count estimation step.

## Advantageous Effects of Invention

According to the present invention, the number of terminals is estimated as the third presence count, based on one or both of the first presence count based on the location data as the collection of multiple pieces of location information including the location registration information and the second presence count based on the location data extracted in accordance with the type of location data, whereby the number of terminals corresponding to somewhere in the numerical range between the first presence count and the second presence count (inclusive of the numerals at the two ends) can be estimated as the third presence count, with higher accuracy. At this time, when the second presence count to be used is the one based on the location data after removal of the location registration information generated due to the crossing of the terminal across the location registration area boundary, the device or method solves the problem that the presence count is overestimated near the location registration area boundary and the presence count is underestimated at the locations a little away from the location registration area boundary, thus allowing more accurate estimation of the presence count.

## Brief Description of Drawings

Fig. 1 is a drawing showing a system configuration of a communication system in embodiments of the present invention.
Fig. 2 is a drawing showing a configuration of a number-of-terminals estimation device.
Fig. 3 is a drawing showing a configuration of first presence count and second presence count estimation units.

Fig. 4 is a drawing for explaining a conception of number-of-terminals estimation.

Fig. 5 is a drawing for explaining a calculation method related to number-of-terminals estimation.

Fig. 6 is a flowchart showing a number-of-terminals estimation process.

Fig. 7 is a flowchart showing estimation processes of first and second presence counts.

Fig. 8 is a flowchart showing a feature amount calculation process.

Fig. 9 is a drawing showing a configuration of a modification example of the first presence count and second presence count estimation units.

Fig. 10 is a flowchart showing a modification example of the estimation processes of first and second presence counts.

Fig. 11 is a drawing showing a configuration of a modification example of the number-of-terminals estimation device.

Fig. 12 is a conceptual diagram showing a relationship between estimated presence counts around an LA boundary and distances from the LA boundary.

Fig. 13 is a drawing for explaining a second conception of number-of-terminals estimation.

Fig. 14 is a drawing for explaining the second conception of number-of-terminals estimation.

Fig. 15 is a flowchart showing a feature amount calculation process in the second embodiment.

Fig. 16 is a flowchart showing an adjustment process of variables s and e.

## Description of Embodiments

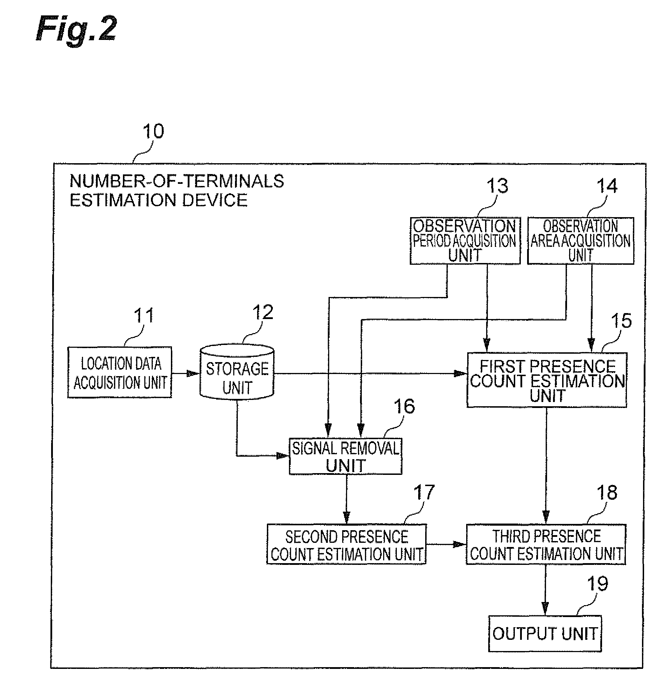

Embodiments of the present invention will be described below with reference to the accompanying drawings. The same portions will be denoted by the same reference signs as much as possible, without redundant description. In the present specification the term "location data" generally means data including a terminal identifier to identify a mobile terminal, a sector identifier to identify a sector where the mobile terminal is located, location information (e.g., latitude and longitude information) about a location of the mobile terminal, and location acquisition time information when the location information is acquired, and the location data includes, for example, information included in a location registration signal generated by the mobile terminal (which will be referred to hereinafter as "location registration information"), GPS location information to which the aforementioned sector identifier is added, and so on. The GPS location information, when generated, does not include the sector identifier, but the sector identifier is added by a base station having received the GPS location information from the mobile terminal and a below-described number-of-terminals estimation device 10 (Fig. 2) can acquire the GPS location information with the sector identifier. It is also assumed that the GPS location information can include the sector identifier when generated. In this case, the sector identifier is added when the mobile terminal generates the GPS location information, and the below-described number-of-terminals estimation device 10 (Fig. 2) can acquire the GPS location information with the sector identifier. The location registration information includes generation factor information indicative of a factor that causes generation of the location registration signal (e.g., periodic location registration, a crossing of the mobile terminal across a location registration area boundary (so called LA-crossing), execution of an attachment process due to a power-on operation of the mobile terminal or the like, execution of a detachment process due to a power-off operation of the mobile terminal or the like, and so on), and, based on this generation factor information, it becomes feasible, for example, to exclude the location registration information generated due to the crossing of the mobile terminal across the location registration area boundary (which will be referred to hereinafter as "LA-crossing location registration information"), from the location registration information, to extract only the location registration information generated due to the periodic location registration, from the location registration information.

[First embodiment]

[Configuration of communication system]

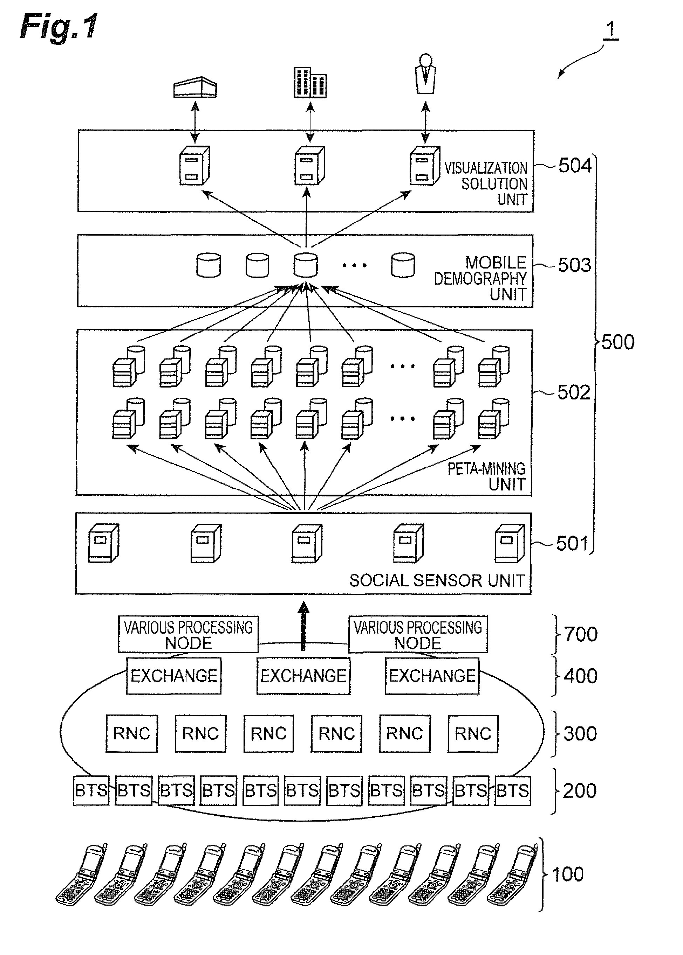

Fig. 1 is a system configuration diagram of a communication system 1 of the present embodiment. As shown in Fig. 1, this communication system 1 is configured including mobile terminals 100, BTSs (base transceiver stations) 200, RNCs (radio network controllers) 300, exchanges 400, various processing nodes 700, and a management center 500. This management center 500 is composed of a social sensor unit 501, a peta-mining unit 502, a mobile demography unit 503, and a visualization solution unit 504.

The exchanges 400 collect below-described location information on the mobile terminals 100 through the BTSs 200 and RNCs 300. The RNCs 300 are able to measure locations of the mobile terminals 100 through the use of delay values in RRC connection request signals, during execution of communication connections with the mobile terminals 100. The exchanges 400 are able to receive the location information of the mobile terminals 100 measured as described above, during execution of communication connections by the mobile terminals 100. The exchanges 400 store the received location information and output the collected location information to the management center 500 at predetermining timing or in response to a request from the management center 500.

The various processing nodes 700 acquire the location  information of the mobile terminals 100 through the RNCs 300 and exchanges 400, perform re-calculation of location or the like if necessary, and output the collected location information to the management center 500 at predetermining timing or in response to a request from the management center 500.

The location information of mobile terminal 100 to be employed in the present embodiment can be a sector-number indicating in which sector the mobile terminal 100 is located, acquired from location registration information; location positioning data obtained by a location information acquisition system such as the GPS positioning system or PRACH PD; and so on. The location data of a mobile terminal 100 includes identification information to identify the mobile terminal (e.g., information associated with the mobile terminal, such as a line number), and location acquisition time information when the location information is acquired, in addition to the aforementioned location information. When the line number is used as the identification information, it is preferable to use a value associated with the line number (e.g., a hash of the line number or the like), instead of using the line number.

The management center 500, as described above, is configured including the social sensor unit 501, peta-mining unit 502, mobile demography unit 503, and visualization solution unit 504, and each unit performs statistical processing using the location data of mobile terminals 100. A below-described number-of-terminals estimation device 10 (Fig. 2) can be composed, for example, of the management center 500.

The social sensor unit 501 consists of server apparatus to collect  data including the location information of mobile terminals 100 and others, from each exchange 400 and various processing node 700, or, off-line. This social sensor unit 501 is configured so as to be able to receive data output at periodic intervals from the exchanges 400 and various processing nodes 700 or to acquire data from the exchanges 400 and various processing nodes 700 in accordance with timing predetermined in the social sensor unit 501.

The peta-mining unit 502 consists of server apparatus to convert data received from the social sensor unit 501, into a predetermined data format. For example, the peta-mining unit 502 performs a sorting process using user IDs as key or a sorting process for each area.

The mobile demography unit 503 consists of server apparatus to perform a totalization process on the data processed in the peta-mining unit 502, i.e., a counting process of each item. For example, the mobile demography unit 503 is able to count the number of users located in a certain area and to totalize the distributions of users.

The visualization solution unit 504 consists of server apparatus to visualize the data totalized in the mobile demography unit 503. For example, the visualization solution unit 504 is able to perform a mapping process of mapping the totalized data on a map. The data processed by this visualization solution unit 504 is provided to companies, public agencies, individuals, or the like to be used in development of shops, surveys of road traffic, countermeasures against natural disasters, countermeasures against environmental damage, and so on. Such statistically processed information is processed so that individuals or the like cannot be identified therefrom, in order to prevent  invasions of privacy, as a matter of course.

Each of the social sensor unit 501, peta-mining unit 502, mobile demography unit 503, and visualization solution unit 504 is composed of the server apparatus as described above, and it is needless to mention that each unit has an ordinary basic configuration of information processing device (i.e., CPU, RAM, ROM, input devices such as keyboard and mouse, a communication device for communication with the outside, a memory device to store information, and output devices such as display and printer), illustration of which is omitted herein.

[Configuration of a number-of-terminals estimation device]

Next, the number-of-terminals estimation device according to the present embodiment will be described. Fig. 2 shows a function block configuration of the number-of-terminals estimation device 10. As shown in this Fig. 2, the number-of-terminals estimation device 10 includes a location data acquisition unit 11, a storage unit 12, an observation period acquisition unit 13, an observation area acquisition unit 14, a first presence count estimation unit 15, a signal removal unit 16, a second presence count estimation unit 17, a third presence count estimation unit 18, and an output unit 19.

The functions of the respective units in the number-of-terminals estimation device 10 in Fig. 2 will be described below. The location data acquisition unit 11 acquires the location data from the outside (e.g., from the exchanges 400 and various processing nodes 700 and others) and stores the location data into the storage unit 12. It is not indispensable to set the location data acquisition unit 11 in the number-of-terminals estimation device 10, and the location data  acquired by the location data acquisition unit located outside the number-of-terminals estimation device 10 may be fed, for example, through a memory medium into the number-of-terminals estimation device 10. The storage unit 12 stores the location data over a plurality of times on a large number of users (mobile terminals). The observation period acquisition unit 13 acquires observation period information including a set of an observation start time and an observation end time. The observation area acquisition unit 14 acquires observation area information associated with one or more pieces of location information. The observation area information herein is provided, for example, as a sector number, a latitude and a longitude, a geographical range (e.g., municipal area unit), or the like and the observation area acquisition unit 14 is preferably provided with a database to manage correspondence information between an expression form of the acquired observation area information and an expression form of the location information (e.g., correspondence relation information between sector numbers and latitudes & longitudes, or the like).

The first presence count estimation unit 15 retrieves the location data from the storage unit 12 and estimates the number of terminals located in the observation area during the observation period, as a first presence count, based on the location data. A number-of-terminals estimation method by the first presence count estimation unit 15 does not have to be limited to a specific method, but may be selected from various methods. An example of the number-of-terminals estimation method and a configuration of the first presence count estimation unit 15 to execute the estimation method will be described later. The number-of-terminals estimation method to be employed can be one except for the below-described example, e.g., the method described in Japanese Patent Application No. 2010-221456 which was filed by the same Applicant. This method is a method wherein an information analysis device receives, from the outside, point data including location information indicative of a location of each user, positioning time information when the location information is acquired, and a user ID, extracts point data with a positioning time immediately preceding a target time and point data with a positioning time immediately following the target time, from the point data on each user, estimates a location of each user at the target time by supplementing an interval between a location indicated by the point data immediately preceding the target time and a location indicated by the point data immediately following the target time, for each user, and calculates a population distribution in each predetermined calculation target area unit at the target time, based on the estimated locations of respective users, and this method can be applied to the number-of-terminals estimation.

The signal removal unit 16 retrieves the location data from the storage unit 12 and removes the location registration information generated due to a crossing of a terminal across a location registration area boundary (which will be referred to hereinafter as "location registration information due to LA-crossing"), from the location data to obtain location data after removal. The "location data after removal" obtained herein includes the location registration information excluding the location registration information due to LA-crossing, out of the location registration information and it is a matter of course that it may further include the location information (e.g., the GPS positioning information or the like) except for the location registration information. The foregoing signal removal unit 16 corresponds to the "extraction unit" and "signal removal unit" in the scope of claims and in the present embodiment, the signal removal unit 16 that removes the location registration information due to LA-crossing from the location data to obtain the location data after removal will be described as an example of the extraction unit to extract the location data in accordance with a type of location data (e.g., the generation factor of the location data or the like). An extraction method in accordance with a type of location data to be executed herein can be, for example, a method of removing only the LA-crossing location registration information from the location data (i.e., extracting the location data except for the LA-crossing location registration information) with reference to the aforementioned generation factor information included in the location registration information, a method of extracting only the location registration information generated due to the periodic location registration from the location data, or the like. The "type of location data" applicable herein can be, for example, a generation time of location data or the like, besides the foregoing generation factor.

The second presence count estimation unit 17 estimates the number of terminals located in the observation area during the observation period, as a second presence count, based on the location data after removal obtained by the signal removal unit 16. A number-of-terminals estimation method by the second presence count estimation unit 17 is not limited to a specific method, either, and can be selected from various methods including the aforementioned method described in Japanese Patent Application No. 2010-221456; however, it is preferably the same method as the number-of-terminals estimation method by the first presence count estimation unit 15. The present embodiment will be described using an example wherein the second presence count estimation unit 17 adopts the same number-of-terminals estimation method as the first presence count estimation unit 15. A specific example of the number-of-terminals estimation method and a specific configuration of the second presence count estimation unit 17 to execute the estimation method will be described later.

The third presence count estimation unit 18 estimates the number of terminals located in the observation area during the observation period, as a third presence count, based on one or both of the first presence count obtained by the first presence count estimation unit 15 and the second presence count obtained by the second presence count estimation unit 17. In Fig. 12 described above, the first presence count estimated based on the location data before removal of the location registration information due to LA-crossing corresponds to the graph of the thick solid line about estimated presence counts plotted by square marks, and the second presence count estimated based on the location data after removal of the location registration information due to LA-crossing corresponds to a graph of a dashed line about estimated presence counts plotted by triangle marks. When the third presence count estimation unit 18 estimates the third presence count, based on one or both of the first presence count and the second presence count, as in the present embodiment, the third presence count can be estimated to be the number of terminals corresponding to somewhere in a numerical range between the first presence count and the second presence count (inclusive of the numerals at the two ends), which becomes closer to a true value in Fig. 12. This process solves the problem that the presence count is overestimated near the location registration area boundary and the presence count is underestimated at the locations a little away from the location registration area boundary, and thus allows more accurate estimation of the presence count.

In the meantime, the number-of-terminals estimation method by the third presence count estimation unit 18 is not limited to a specific method, but can be selected from various methods as described below. For example, the third presence count estimation unit 18 may estimate the third presence count to be the number of terminals corresponding to a predetermined proportional division point between the first presence count and the second presence count. The proportional division point herein may be an exact center point between the first presence count and the second presence count, a point of trisection of the numerical range between the first presence count and the second presence count that is closer to the second presence count, or any proportional division point other than these.

Furthermore, the third presence count estimation unit 18 may estimate the third presence count as follows: when the first presence count is not less than the second presence count, the third presence count estimation unit 18 estimates the third presence count to be the number of terminals corresponding to the proportional division point between the first presence count and the second presence count as described above; on the other hand, when the first presence count is less than the second presence count, the third presence count estimation unit 18 estimates the third presence count to be the second presence count.

The third presence count estimation unit 18 may carry out the estimation of the third presence count by switching the presence count as a basis of the estimation for each observation area, among the first presence count only, the second presence count only, and, both of the first and second presence counts.

The third presence count estimation unit 18 may estimate an error of the number of terminals caused by a crossing of a terminal across a location registration area boundary, based on the first presence count and the second presence count. For example, the third presence count estimation unit 18 may estimate the error of the number of terminals caused by the crossing of the terminal across the location registration area boundary to be a difference between the first presence count and the second presence count. The error of the number of terminals estimated in this manner can be used in evaluation of accuracy about the estimation of the number of terminals. The estimation of the error of the number of terminals described above cannot be executed only in the embodiment wherein the signal removal unit 16 removes the location registration information due to LA-crossing from the location data to obtain the location data after removal, but can also be executed in any embodiment wherein the location data is extracted in accordance with a type of location data.

Returning to Fig. 2, the output unit 19 outputs the number of terminals obtained by the estimation. The output herein includes a variety of output modes such as display output, voice output, and print output. It is noted that in the number-of-terminals estimation device 10 the first presence count estimation unit 15, the signal removal unit 16, the second presence count estimation unit 17, and the third presence count estimation unit 18 are indispensable constituent elements and it is not indispensable to set the other constituent elements in the number-of-terminals estimation device 10.

[Configurations of first presence count and second presence count estimation units]

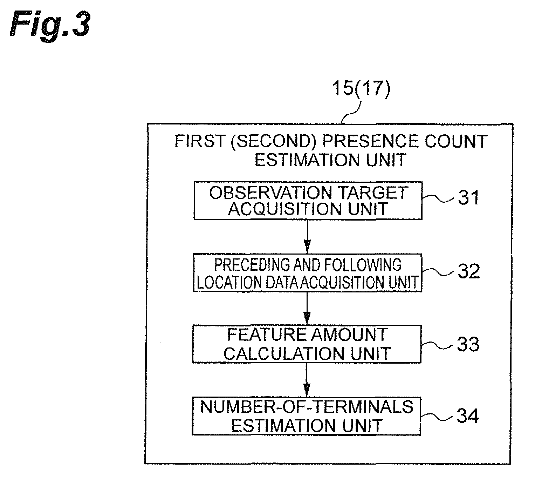

Fig. 3 shows the configuration of the first presence count estimation unit 15. Since in the present embodiment the second presence count estimation unit 17 adopts the same number-of-terminals estimation method as the first presence count estimation unit 15, the configuration of the second presence count estimation unit 17 is the same as the configuration of the first presence count estimation unit 15 described below.

As shown in Fig. 3, the first presence count estimation unit 15 includes an observation target acquisition unit 31, a preceding and following location data acquisition unit 32, a feature amount calculation unit 33, and a number-of-terminals estimation unit 34.

The observation target acquisition unit 31 acquires observation start time information and observation end time information about the observation period to be observed, from the observation period acquisition unit 13, acquires observation area information about the observation area to be observed, from the observation area acquisition unit 14, and acquires as observation target location data, one or more pieces of location data including location acquisition time information after the observation start time and before the observation end time, and location information associated with the observation area information, from the storage unit 12. The observation target location data may be further subjected to a narrowing process by a separately given condition (e.g., age groups of users of mobile terminals or the like).

The preceding and following location data acquisition unit 32 acquires, concerning a piece of location data as a target on which a below-described feature amount is calculated in a procedure of presence count estimation processing (which will be referred to hereinafter as "first location data"), the location acquisition time information of location data immediately preceding the first location data (which will be referred to hereinafter as "second location data") and the location acquisition time information of location data immediately following the first location data (which will be referred to hereinafter as "third location data"), from the location data including the same identification information as the first location data. It is not essential for the preceding and following location data acquisition unit 32 to acquire the whole of the second or third location data, but it is sufficient for the preceding and following location data acquisition unit 32 to acquire, at least, the location acquisition time information in the location data. The preceding and following location data acquisition unit 32 may retrieve the location acquisition time information of the second and third location data from the storage unit 12 or receive the information from the location data acquisition unit 11. It makes no logical difference if either method is employed.

The feature amount calculation unit 33 calculates the feature amount on each piece of first location data. For example, the feature amount calculation unit 33 calculates a difference between the location acquisition time of the second location data and the location acquisition time of the third location data, as the feature amount on the first location data. When the location acquisition time of the second location data is an abnormal value, e.g., when a difference between the location acquisition time of the first location data and the location acquisition time of the second location data is larger than a predetermined reference value (e.g., one hour) as an example, the feature amount calculation unit 33 uses as the location acquisition time of the second location data, a time set backward by a predetermined time (e.g., one hour) from the location acquisition time of the first location data to calculate the feature amount on the first location data. Similarly, when the location acquisition time of the third location data is an abnormal value, e.g., when a difference between the location acquisition time of the first location data and the location acquisition time of the third location data is larger than a predetermined reference value (e.g., one hour) as an example, the feature amount calculation unit 33 uses as the location acquisition time of the third location data, a time set forward by a predetermined time (e.g., one hour) from the location acquisition time of the first location data to calculate the feature amount on the first location data. These processes in the case where the location acquisition time of the second or third location data is an abnormal value are not indispensable processes, but execution of the above processes can prevent such inconvenience that when an acquisition time interval of location data becomes abnormally long because of the mobile terminal 100 being located in an out-of-service area or because of the mobile terminal 100 being in a power-off mode, the abnormally long acquisition time interval excessively affects the calculation result.

The number-of-terminals estimation unit 34 estimates the number of terminals located in the observation area during the observation period, based on the feature amounts on the observation target location data and the length of the observation period which is the difference between the observation start time and the observation end time. The details will be described later, but the number-of-terminals estimation unit 34 estimates the number of terminals to be a numeral obtained by dividing the sum of the feature amounts on the observation target location data by twice the length of the observation period.

[Conception and calculation method of number-of-terminals estimation]

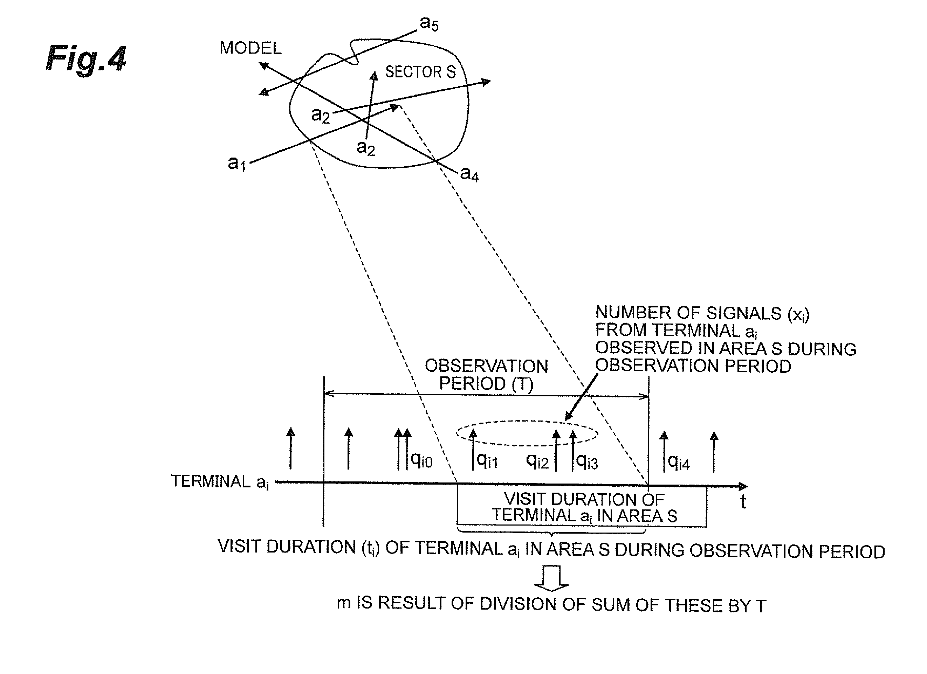

Next, the conception and the calculation method of number-of-terminals estimation will be described. Let us assume, like the model shown in Fig. 4, that n terminals $a_1$, $a_2$, ..., $a_n$ pass a sector S during a certain observation period (length T) and a visit duration of each terminal $a_i$ in the sector S during the observation period is $t_i$ ($0 < t_i \leq T$). In this case, a count m of terminals located in the sector S (in fact, an average in the observation period of the count m of terminals located in the sector S) is represented by Equation (1) below.

$$m = \sum_{i=1}^{n} t_i \Big/ T \qquad (1)$$

Namely, the number of terminals m is estimated to be the result of a division of the sum of visit durations $t_i$ of respective terminals $a_i$ in the sector S during the observation period by the length T of the observation period. However, true values of the visit durations $t_i$ of the respective terminals $a_i$ in the sector S during the observation period are unobservable, but each terminal $a_i$ sends signals (e.g., location registration signals including the location registration information), which are observable.

Let us assume that signals sent in the sector S during the observation period by terminal $a_i$, are defined in chronological order as follows.

$$q_{i1}, \quad q_{i2}, \ldots, \quad q_{ix_i}$$

(where $x_i$ is a total number of signals sent in the sector S during the observation period by terminal $a_i$). Then the estimation of the number of terminals is nothing but estimating the value of m from the observed signals $q_{ij}$ (where j is an integer of not less than 1 and not more than $x_i$).

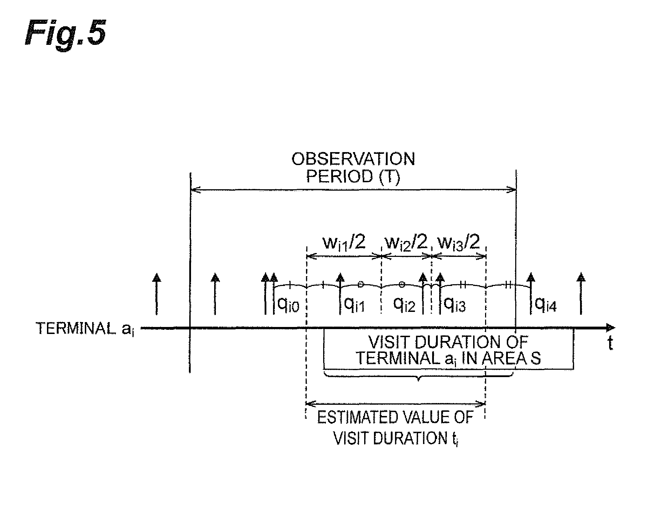

Now, let us explain the calculation method of number-of-terminals estimation on the basis of Fig. 5. It is assumed that a density of signals $q_{ij}$ transmitted from terminal $a_i$ (i.e., the number of signals per unit time) is $p_i$. At this time, supposing that a probability of transmission of signal is independent of the sector, an expectation $E(x_i)$ of a total $x_i$ of signals sent in the sector S during the observation period by terminal $a_i$ is given by $E(x_i) = t_i \times p_i$ and therefore Equation (2) below holds as to an expectation $E(t_i)$ of the visit duration $t_i$ of terminal $a_i$ in the sector S during the observation period.

$$E(t_i) = x_i/p_i \qquad (2)$$

When a transmission time of each signal $q_{ij}$ is represented by $u_{ij}$, a density $p_{ij}$ of signal $q_{ij}$ is given by Equation (3) below.

$$p_{ij} = 2/(u_{i(j+1)} - u_{i(j-1)}) \qquad (3)$$

When the signal $q_{ij}$ is assumed to be a signal related to the first location data, the signal $q_{i(j-1)}$ corresponds to a signal related to the second location data and the signal $q_{i(j+i)}$ to a signal related to the third location data. In the present embodiment, a difference between the transmission time $u_{i(j-1)}$ of the signal $q_{i(j-1)}$ related to the second location data and the transmission time $u_{i(j+1)}$ of the signal $q_{i(j+1)}$ related to the third location data, i.e., $(u_{i(j+1)} - u_{i(j-1)})$ in above Equation (3) is defined as a feature amount $w_{ij}$ on the first location data (feature amount $w_{ij} = u_{i(j+1)} - u_{i(j-1)}$). Therefore, Equation (3) above can be written into the formula below.

$$p_{ij} = 2/(u_{i(j+1)} - u_{i(j-1)}) = 2/w_{ij} \qquad (4)$$

At this time, since the density $p_i$ is given by the following formula:

$$p_i = x_i \Big/ E\ (t_i)\ = (x_i \Big/ \sum_{j=1}^{x_i} w_{ij}) \times 2 \qquad (5),$$

an estimated value $E(m)$ of the number of terminals m can be calculated according to Equation (6) below.

$$E\ (m)\ =\ (\sum_{i=1}^{n} \sum_{j=1}^{x_i} (w_{ij} \Big/ 2))\ \Big/ T\ =\ (\sum_{i=1}^{n} \sum_{j=1}^{x_i} w_{ij})\ \Big/ 2T \qquad (6)$$

When it is assumed as shown in the example of Fig. 5 that in the observation period and in the duration in which the terminal $a_i$ is located in the sector S, the terminal $a_i$ transmits signals $q_{i1}$, $q_{i2}$, and $q_{i3}$, that the terminal $a_i$ transmits a signal $q_{i0}$ immediately preceding the signal $q_{i1}$ and transmits a signal $q_{i4}$ immediately following the signal $q_{i3}$, and that the transmission times of the signals $q_{i0}$, $q_{i1}$, $q_{i2}$, $q_{i3}$, and $q_{i4}$ are $u_{i0}$, $u_{i1}$, $u_{i2}$, $u_{i3}$, and $u_{i4}$, respectively, the aforementioned conception is equivalent to estimating the visit duration $t_i$ of the terminal $a_i$ in the sector S during the observation period to be a duration from (a midpoint between $u_{i0}$ and $u_{i1}$) to (a midpoint between $u_{i3}$ and $u_{i4}$). The terminal $a_i$ transmits the signal $q_{i4}$ when located in the sector S, though it is not transmitted during the observation period. However, the estimation is not carried out on the assumption that the end time of the visit duration $t_i$ is the same as the end time of the observation period T. In this manner, unbiasedness of the estimated value of the visit duration $t_i$ is maintained.

[Number-of-terminals estimation process]

A number-of-terminals estimation process according to a number-of-terminals estimation method of the present invention will be described below. It is assumed herein as an example that the location information in the location data of a mobile terminal given herein includes a sector number of a sector in which the mobile terminal visits. It is also assumed herein that a set of an observation start time T1 and an observation end time T2 are preliminarily acquired as observation period information by the observation period acquisition unit 13 and that a sector number S is preliminarily acquired as observation area  information by the observation area acquisition unit 14.

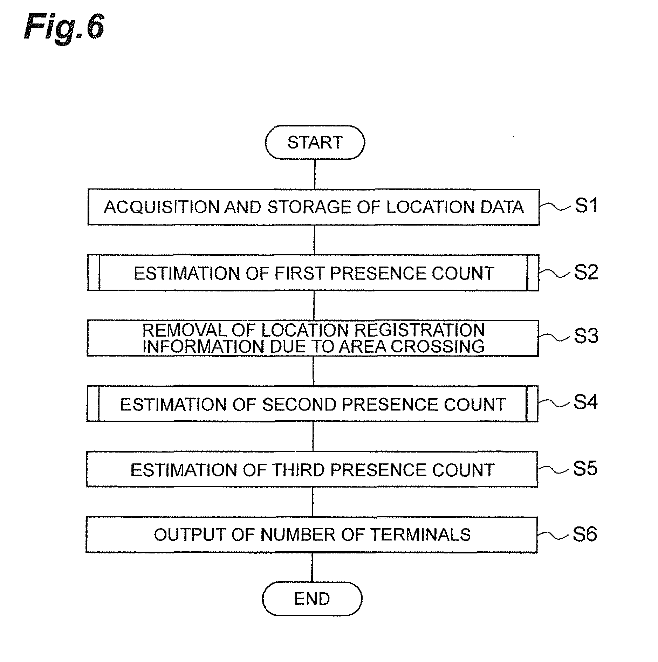

As shown in Fig. 6, first, the location data acquisition unit 11 acquires the location data from the outside and stores the location data into the storage unit 12 (step S1 in Fig. 6). Through this step, the storage unit 12 comes to store the location data over a plurality of times on a large number of users (mobile terminals). After execution of the process in step S1, processes in step S2 and subsequent steps may be executed after a lapse of some time. Namely, step S1 may be executed as a preparation step before the processes in step S2 and subsequent steps.

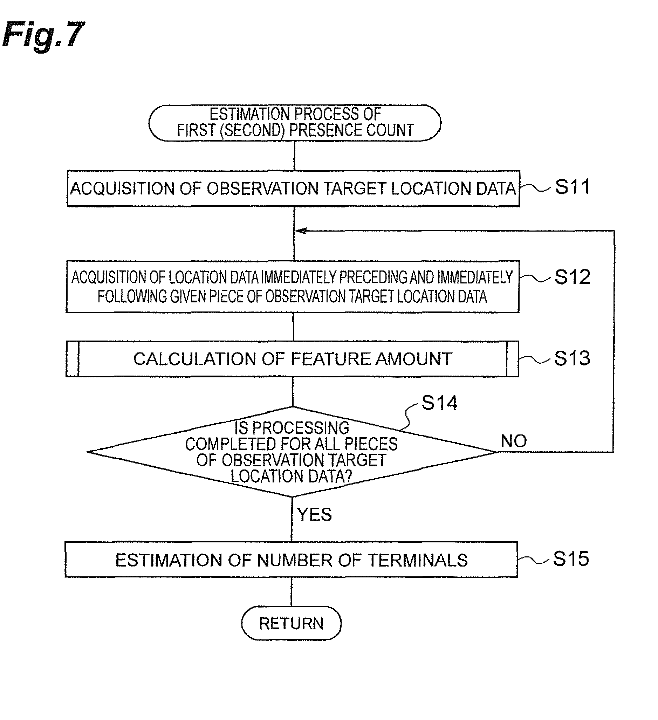

Next, the first presence count estimation unit 15 retrieves the location data from the storage unit 12 and estimates the number of terminals located in the observation area during the observation period, as a first presence count, based on the location data (step S2 in Fig. 6). A specific process content will be described later using Fig. 7.

Next, the signal removal unit 16 retrieves the location data from the storage unit 12 and removes the location registration information due to LA-crossing from the location data to obtain location data after removal (step S3 in Fig. 6). The process of retrieving the location data from the storage unit 12 by the signal removal unit 16 is not indispensable, but the signal removal unit 16 may receive the location data retrieved in step S2 in Fig. 6, from the first presence count estimation unit 15. It makes no logical difference if the signal removal unit 16 receives the location data from the first presence count estimation unit 15 or retrieves the location data from the storage unit 12.

Next, the second presence count estimation unit 17 estimates the  number of terminals located in the observation area during the observation period, as a second presence count, based on the location data after removal obtained by the signal removal unit 16 (step S4 in Fig. 6). A specific process content will be described later using Fig. 7.

Then the third presence count estimation unit 18 estimates the number of terminals located in the observation area during the observation period, as a third presence count, based on one or both of the first presence count obtained by the first presence count estimation unit 15 and the second presence count obtained by the second presence count estimation unit 17 (step S5 in Fig. 6). For example, the third presence count estimation unit 18 estimates the third presence count to be the number of terminals corresponding to a predetermined proportional division point between the first presence count and the second presence count. The proportional division point herein may be an exact center point between the first presence count and the second presence count, a point of trisection of the numerical range between the first presence count and the second presence count that is closer to the second presence count, or any proportional division point other than these. As another example, the third presence count estimation unit 18 may estimate the third presence count as follows: when the first presence count is not less than the second presence count, the third presence count estimation unit 18 estimates the third presence count to be the number of terminals corresponding to the proportional division point between the first presence count and the second presence count as described above; on the other hand, when the first presence count is less than the second presence count, the third presence count estimation unit  18 estimates the third presence count to be the second presence count. The third presence count estimation unit 18 may carry out the estimation of the third presence count by switching the presence count as a basis of the estimation for each observation area, among the first presence count only, the second presence count only, and, both of the first and second presence counts.

Finally, the output unit 19 outputs the number of terminals obtained by the estimation (step S5 in Fig. 6). The output herein includes a variety of output modes such as the display output, voice output, and print output.

When the number of terminals is estimated as the third presence count, based on one or both of the first presence count based on the location data which are a collection of multiple pieces of location information including the location registration information and the second presence count based on the location data after removal of the location registration information due to LA-crossing, as described above, the third presence count can be estimated to be the number of terminals corresponding to somewhere in the numerical range between the first presence count and the second presence count (inclusive of the numerals at the two ends), whereby the estimated presence count can be made closer to a true value as illustrated as an example in Fig. 12. This process solves the problem that the presence count is overestimated near the LA boundary and the presence count is underestimated at the locations a little away from the LA boundary, whereby the presence count can be estimated with better accuracy.

[Example of first presence count and second presence count  estimation processes]

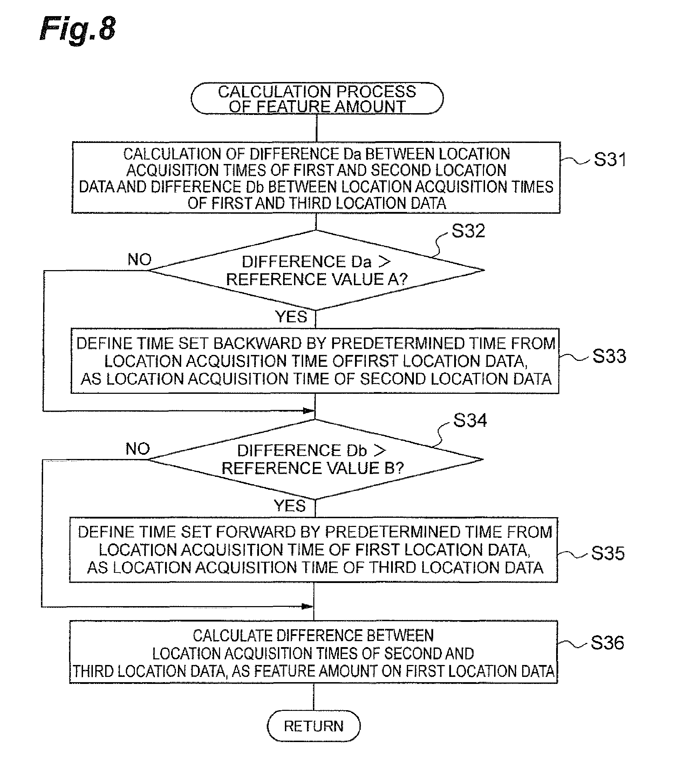

The below will describe an example of step S2 in Fig. 6 (first presence count estimation process) and step S4 in Fig. 6 (second presence count estimation process), using Fig. 7 and Fig. 8. It is needless to mention that the first presence count and second presence count estimation processes are not limited only to the content of the process described below.

As shown in Fig. 7, the observation target acquisition unit 31 in Fig. 3 first acquires the set of the observation start time T1 and the observation end time T2 as observation period information from the observation period acquisition unit 13 and the sector number S as observation area information from the observation area acquisition unit 14 and thereafter acquires as the observation target location data, one or more pieces of location data including the location acquisition time information after the observation start time T1 and before the observation end time T2 and including the location information associated with the sector number S as the observation area information (e.g., location data the location information of which is the sector number S), from the storage unit 12 (step S11 in Fig. 7). Namely, the observation target acquisition unit 31 acquires the location data meeting the following conditions, as the observation target location data. Condition 1: the location acquisition time is after the observation start time T1 and before the observation end time T2. Namely, the location acquisition time is within the observation period.

Condition 2: the location information is the sector S.

Next, the processes in steps S12 and S13 below are executed for each piece of the acquired observation target location data. In step S 12, concerning a piece of location data (first location data) as a target for calculation of the feature amount out of the observation target location data, the preceding and following location data acquisition unit 32 acquires the location acquisition time information of the location data (second location data) immediately preceding the first location data and the location acquisition time information of the location data (third location data) immediately following the first location data, in view of their location acquisition times, from the location data including the same identification information as the first location data. It is noted herein that it is not essential for the preceding and following location data acquisition unit 32 to acquire the whole of the second and third location data, but it is sufficient for the preceding and following location data acquisition unit 32 to acquire the location acquisition time information in the second and third location data. The preceding and following data acquisition unit 32 may retrieve the location acquisition time information of the second and third location data from the storage unit 12 or receive the information from the location data acquisition unit 11. It makes no logical difference if either method is employed.

Then, in step S13 the feature amount calculation unit 33 calculates the feature amount on the first location data. The content of the process will be described using Fig. 8. It is assumed herein that the location acquisition times of the first, second, and third location data are t1, t2, and t3, respectively. It is also assumed that a reference value A (e.g., one hour) is defined as a predetermined reference value of a reference to determine that the location acquisition time t2 of the second location data is an abnormal value (a reference value about a difference between the location acquisition times of the first and second location data) and that a reference value B (e.g., one hour) is defined as a predetermined reference value of a reference to determine that the location acquisition time t3 of the third location data is an abnormal value (a reference value about a difference between the location acquisition times of the first and third location data).

The feature amount calculation unit 33 calculates the difference between the location acquisition the times of the first and second location data (i.e., the difference between the times t1 and t2) Da, and the difference between the location acquisition times of the first and third location data (i.e., the difference between times t1 and t3) Db (step S31 in Fig. 8). Then the feature amount calculation unit 33 determines whether the difference Da between the location acquisition times of the first and second location data is larger than the predetermined reference value A (e.g., one hour) (step S32); if the difference Da is larger than the reference value A, the feature amount calculation unit 33 defines a time set backward by a predetermined time (e.g., one hour) from the location acquisition time t1 of the first location data, as the location acquisition time t2 of the second location data (step S33). Next, the feature amount calculation unit 33 determines whether the difference Db between the location acquisition times of the first and third location data is larger than the predetermined reference value B (e.g., one hour) (step S34); if the difference Db is larger than the reference value B, the feature amount calculation unit 33 defines a time set forward by a predetermined time (e.g., one hour) from the location acquisition time t1 of the first location data, as the location acquisition time t3 of the third location data (step S35). Then the feature amount calculation unit 33 calculates a difference between the location acquisition time t2 of the second location data and the location acquisition time t3 of the third location data, as a feature amount on the first location data (step S36).

The above completes the processes in steps S12 and S13 in Fig. 7 for a given piece of observation target location data (first location data).

Thereafter, the aforementioned processes in steps S12 and S 13 are executed for each piece of the observation target location data, and the flow goes to step S15 after the execution of the processes is completed for all pieces of the observation target location data (with an affirmative judgment in step S 14).

In step S15, the number-of-terminals estimation unit 34 calculates the sum of feature amounts $w_{ij}$ on the observation target location data and estimates the number of terminals to be a numeral obtained by dividing the resultant sum of the feature amounts $w_{ij}$ by twice the length T of the observation period, as in Equation (6) described above. In this manner, the first or second presence count can be estimated.

Since the foregoing example of estimation process involves performing the correction using the acquisition time information of the preceding and following location data in estimating the number of terminals using the location data, the number of terminals can be accurately estimated while correcting the influence of variation in reception intervals. Since the processes in the case where the location acquisition time of the second or third location data is the abnormal value as described above are carried out in the calculation process of feature amount, when the acquisition time interval of location data becomes abnormally long because of the mobile terminal 100 being located in an out-of-service area or because of the mobile terminal 100 being in a power-off mode, it becomes feasible to prevent the abnormally long acquisition time interval from excessively affecting the calculation result.

As apparent from Equation (6), the number-of-terminals estimation unit 34 may estimate the number of terminals to be a numeral obtained by dividing each of the feature amounts $w_{ij}$ on the observation target location data by 2, calculating the sum of (feature amounts $w_{ij}$/2), and then dividing the obtained sum by the length T of the observation period. However, the number of divisions is overwhelmingly smaller in the calculation method of dividing the sum of the feature amounts $w_{ij}$ on the observation target location data by twice the length T of the observation period as in the present embodiment, which provides the advantage of reduction in processing load.

[Modification of estimation processes of first and second presence counts]

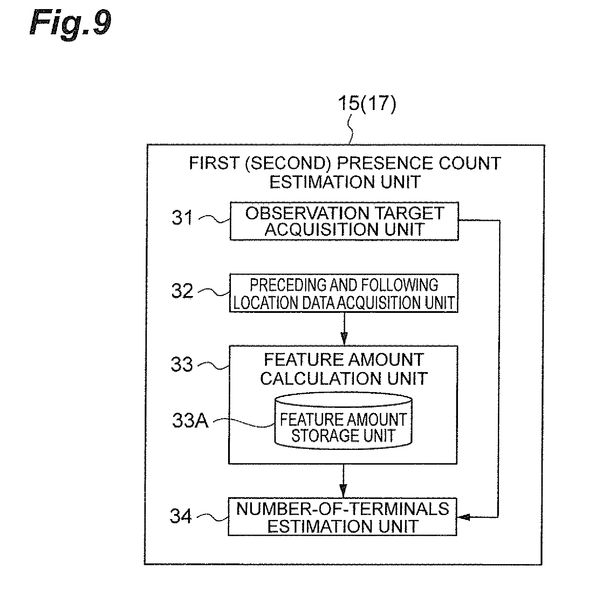

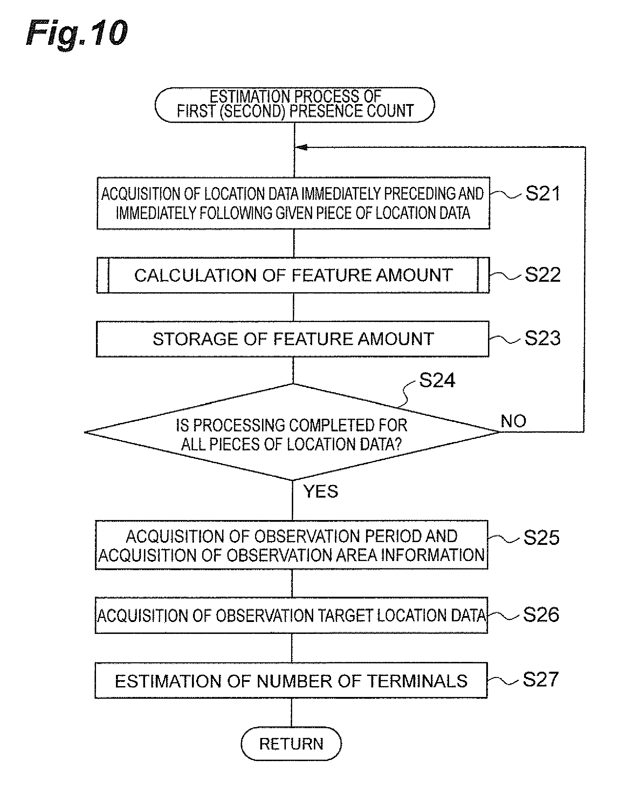

The foregoing estimation processes of first and second presence counts showed the example in which the location data of the target for calculation of the feature amount was narrowed down to the observation target location data, whereas a modification example thereof below will describe an example in which the feature amounts are calculated for targets of all pieces of the acquired location data and thereafter they are narrowed down to the feature amounts to be used in the estimation. Fig. 9 shows a configuration example of the first presence count and second presence count estimation units 15, 17 according to the modification example and Fig. 10 shows the estimation process content.

Namely, as shown in Fig. 9, the first- or second presence count estimation unit 15 or 17 according to the modification example is provided with the same components as in the foregoing embodiment (Fig. 3) and the functions of the respective components are much the same; therefore, it will be described with focus on differences from the foregoing embodiment (Fig. 3).

The observation target acquisition unit 31 in the modification example acquires as the observation target location data, one or more pieces of location data including the location acquisition time information after the observation start time and before the observation end time about the observation period to be observed and including the location information associated with the observation area information about the observation area to be observed, and thereafter it outputs the observation target location data to the number-of-terminals estimation unit 34.

The preceding and following location data acquisition unit 32 defines each of all pieces of the location data acquired by the location data acquisition unit 11, as the first location data and acquires the location acquisition time information of the second location data (immediately-preceding location data) and the third location data (immediately-following location data) about the first location data. The location data acquired by the location data acquisition unit 11 may be data stored in the storage unit 12 after acquired by the location data acquisition unit 11, or data transmitted from the location data acquisition unit 11 to the preceding and following location data acquisition unit 32, without being stored in the storage unit 12. Namely, the preceding and following location data acquisition unit 32 may retrieve the location acquisition time information of the second and third location data from the storage unit 12 or receive the information from the location data acquisition unit 11. It makes no logical difference if either method is adopted.

The feature amount calculation unit 33 defines each of all pieces of the location data acquired by the location data acquisition unit 11, as the first location data and calculates the feature amount on the first location data. Since the result of this calculation becomes a huge amount of data, the feature amount calculation unit 33 is preferably provided with a feature amount storage unit 33A for storage of feature amounts as the calculation result as shown in Fig. 9, and the feature amount storage unit 33A stores the feature amounts as the calculation result. The modification example is the same as the foregoing embodiment in that the feature amount calculation unit 33 calculates the difference between the location acquisition times of the second and third location data as the feature amount on the first location data and in that the device performs the processes in the case where the location acquisition time of the second or third location data is an abnormal value as shown in Fig. 8.

The number-of-terminals estimation unit 34 extracts the feature amounts on the observation target location data received from the observation target acquisition unit 31, from the feature amounts on all pieces of location data preliminarily calculated and stored in the feature amount storage unit 33A, and estimates the number of terminals located in the observation area during the observation period, based on the feature amounts on the observation target location data and the difference between the observation start time and the observation end time (the length of the observation period). Specifically, as in the aforementioned embodiment, the number-of-terminals estimation unit 34 estimates the number of terminals to be a numeral obtained by dividing the sum of the feature amounts on the observation target location data by twice the length of the observation period.

The number-of-terminals estimation process in the modification example will be described below. It is assumed herein that the location information in the location data of each mobile terminal given is a sector number of a sector in which the mobile terminal is located.

As shown in Fig. 10, the processes in steps S21 to S23 below are carried out for each of all pieces of the location data. In step S21, concerning a given piece of location data (first location data) as a target for calculation of the feature amount, the preceding and following location data acquisition unit 32 acquires the location acquisition time information of the location data (second location data) immediately preceding the first location data and the location acquisition time information of the location data (third location data) immediately following the first location data in view of the location acquisition times, from the location data including the same identification information as the first location data. It is not essential for the preceding and following location data acquisition unit 32 to acquire the whole of the second and third location data, but it is sufficient for the preceding and following location data acquisition unit 32 to acquire the location acquisition time information in the second and third location data. Then in step S22, the feature amount calculation unit 33 calculates the feature amount on the first location data in accordance with the procedure shown in Fig. 8 which is the same as in the aforementioned embodiment. Since the process in step S22 is the same as the process in step S 13 of Fig. 7 in the embodiment described above, the description thereof is omitted herein. Thereafter, the feature amount obtained in step S22 is stored in the feature amount storage unit 33A (step S23).

The above completes the processes in steps S21-S23 on a given piece of observation target location data (first location data).

Thereafter, the processes in steps S21-S23 are executed for each of all pieces of the location data. After the processes in steps S21-S23 are completed for all pieces of the location data (with an affirmative judgment in step S24), the feature amounts on all pieces of the location data have been calculated and stored in the feature amount storage unit 33A. In this manner, the feature amounts on all pieces of the location data can be preliminarily calculated and stored before execution of the number-of-terminals estimation.

In next step S25, the observation period acquisition unit 13 acquires the observation period information including a set of an observation start time and an observation end time and the observation area acquisition unit 14 acquires the observation area information associated with one or more pieces of location information. It is assumed herein that a set of an observation start time T1 and an observation end time T2 are acquired as the observation period information and that a sector number S is acquired as the observation area information.

Next, the observation target acquisition unit 31 acquires as the observation target location data, one or more pieces of location data including the location acquisition time information after the observation start time T1 and before the observation end time T2 and including the location information associated with the sector number S as the observation area information (e.g., the location information of which is the sector number S), from the storage unit 12 (step S26). Namely, the observation target acquisition unit 31 acquires the location data meeting the following conditions, as the observation target location data. Condition 1: the location acquisition time is after the observation start time T1 and before the observation end time T2. Namely, the location acquisition time is within the observation period.

Condition 2: the location information is the sector S.

As shown in Equation (6) above, the number-of-terminals estimation unit 34 then estimates the number of terminals to be a numeral obtained by dividing the sum of the feature amounts $w_{ij}$ on the observation target location data by twice the length T of the observation period (step S27). In this manner, the device can estimate the first or second presence count.

Since the foregoing modification example involves calculating and storing the feature amounts on all pieces of location data in advance before the execution of the number-of-terminals estimation, the number-of-terminals estimation device 10 is able to reduce the time from the acquisition of the observation period information and the observation area information and the start of the number-of-terminals estimation process to the acquisition of the number of terminals as the estimation result.

In the processing of Fig. 10, it is not essential to execute the processes in steps S25-S26 after step S24, and the processes in steps S21 to S24 may be concurrently executed in parallel with the processes in steps S25-S26.

[Modification example of number-of-terminals estimation device]

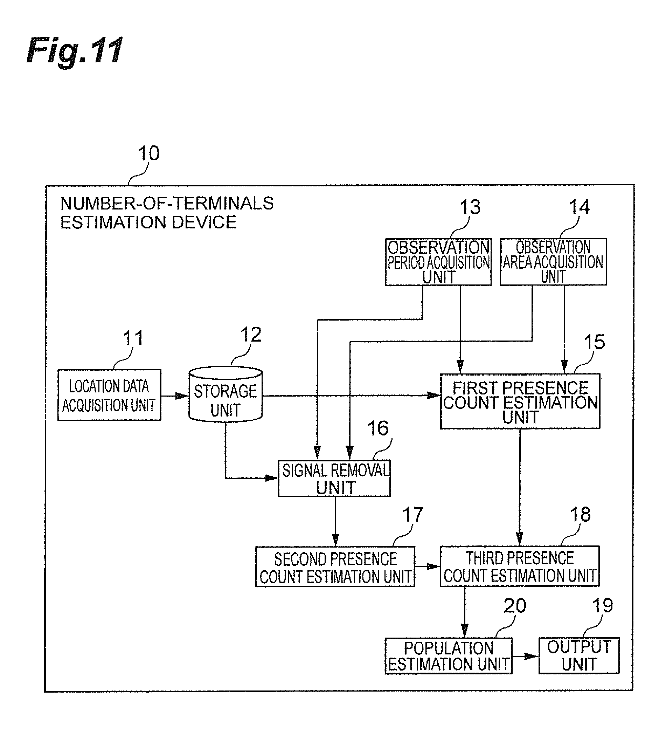

The number-of-terminals estimation device 10 of the aforementioned embodiment may be further provided with a population estimation unit 20 to estimate a population in an observation area during an observation period, as shown in Fig. 11. This population estimation unit 20 estimates a population, based on a ratio of a presence count and a population in a predetermined area (e.g., a ratio of a presence count and a population in an observation area during an observation period) and the third presence count obtained by the third presence count estimation unit 18. For example, when the foregoing ratio is (presence count/population), the population estimation unit 20 can divide the third presence count by the ratio to estimate the population in the observation area during the observation period and the output unit 19 can output the population thus obtained.

The ratio of presence count and population may be, for example, a "terminal subscription rate" which is a ratio of "the number of subscriber terminals of a specific telecommunications carrier from which the location data is acquired" to "a population in an area of a specific range." At this time, the foregoing ratio (also including the terminal subscription rate) is preferably used in the estimation of population by obtaining ratios in respective areas, ratios in respective genders, ratios in respective age groups, and so on. The population may also be estimated by obtaining a ratio of a presence count and a population in the entire country during the observation period, or by obtaining a certain constant. A predetermined ratio may also be used instead of the observation period.

The population in the observation area during the observation period can be estimated and output by taking the number of terminals from which the location data is not acquired (e.g., terminals in a power-off mode, terminals located in areas out of service, etc.), into consideration.

When "population/presence count" is adopted as the aforementioned ratio of presence count and population, this ratio is also called "scaling factor". The scaling factor may be derived as follows. The scaling factor to be used herein as an example can be a reciprocal of "a product of a presence rate and a terminal penetration rate (i.e., a ratio of a presence count to a population)." The "presence rate" herein means a ratio of a presence count to the number of subscriptions, and the "penetration rate" means a ratio of the number of subscriptions to a population. It is preferable to derive such a scaling factor in each of the aforementioned scaling factor calculation units, but it is not essential. The scaling factor may be derived, for example, using the number of terminals (presence count) estimated based on the feature amounts and the length of the observation period as follows. Namely, the feature amounts are calculated from the location data by the technique as described in the first embodiment, the numbers of terminals in respective scaling factor calculation units are totalized based on the feature amounts and the length of the observation period to obtain user count pyramid data, and population pyramid data in the same scaling factor calculation units preliminarily obtained as statistical data (e.g., the Basic Resident Register or the like) is acquired. Then an acquisition rate of location data in each of the scaling factor calculation units (i.e., presence count/population in each unit) is calculated with the user count pyramid data and the population pyramid data. The "acquisition rate of location data (i.e., presence count/population)" obtained herein corresponds to the aforementioned "product of a presence rate and a terminal penetration rate". A reciprocal of the "acquisition rate of location data" obtained in this manner can be derived as a scaling factor. The scaling factor calculation units for calculation of the scaling factor to be employed may be, for example, prefectures of addresses, age groups at 5-year or 10-year intervals, genders, time zones of one-hour intervals, and so on, or may be combinations of two or more of them. For example, when a scaling factor calculation unit is "men in their twenties residing in Tokyo", location data extracted is location data corresponding to men in their twenties residing in Tokyo (namely, the address information in user attributes of which is Tokyo) in the whole of Japan; the number of terminals is counted to obtain user count pyramid data; population pyramid data about men in their twenties residing in Tokyo is acquired from the statistical data. In obtaining the user count pyramid data, as to the condition of "residing in Tokyo," the device does not extract only the location data of users residing in Tokyo, but the device extracts the location data the address information in user attributes of which is Tokyo. Then the acquisition rate (i.e., presence count/population) of the location data in the scaling factor calculation unit (men in their twenties residing in Tokyo herein) is calculated from the user count pyramid data and the population pyramid data, and a reciprocal of the obtained "acquisition rate of location data" can be derived as a scaling factor. In the present specification, the description is given on the assumption that the scaling factor calculation units are equal to the population estimation units, but this is just an example, without having to be limited to this example.

[Second embodiment]

The second embodiment will describe the second technique about the number-of-terminals estimation and a feature amount calculation process based on the same technique. Since the configurations of the communication system and the number-of-terminals estimation device in the second embodiment are the same as in the first embodiment, the description thereof is omitted herein.

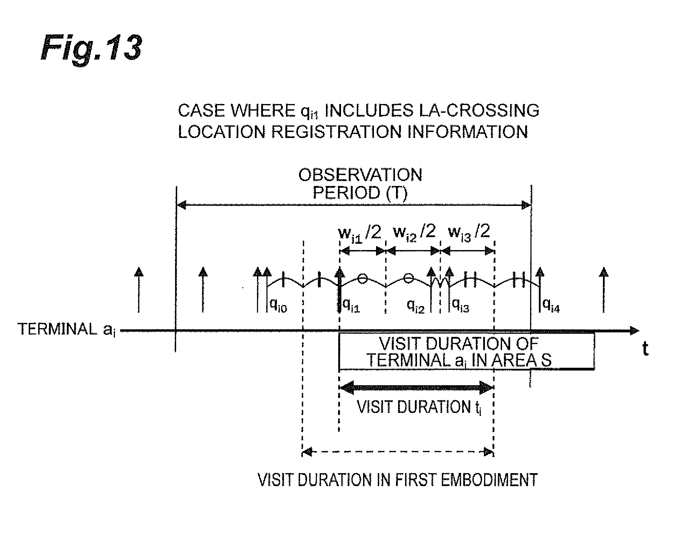

Fig. 13 shows a drawing concerning the second conception of number-of-terminals estimation. In the Fig. 13, $q_{ij}$ represents the location data generated by terminal $a_i$, and among them, $q_{i1}$, $q_{i2}$, and $q_{i3}$ indicate the location data generated by terminal $a_i$ when located in the sector S during the observation period. It is assumed herein that $q_{i1}$ includes location registration information generated due to a crossing of the terminal $a_i$ across a boundary of a location registration area (which will be referred to hereinafter as "LA-crossing location registration information"), and it will be referred to hereinafter as "LA-crossing location registration information $q_{i1}$." In this case, since it can be determined that the terminal $a_i$ entered the sector S at a time of generation of the LA-crossing location registration information $q_{i1}$, we can also establish another conception to define the feature amount $w_{i1}$ on the LA-crossing location registration information $q_{i1}$,

as a difference between the generation time of the LA-crossing location registration information $q_{i1}$ and the generation time of the immediately-following location data $q_{i2}$, instead of the difference between the generation time of the immediately-preceding location data $q_{i0}$ and the generation time of the immediately-following location data $q_{i2}$ as employed in the aforementioned first embodiment.

Based on this conception, the visit duration $t_i$ in which the terminal $a_i$ is located in the sector S during the observation period is a duration indicated by a thick solid line in Fig. 13, which is shorter by "difference between the generation time of the LA-crossing location registration information $q_{i1}$ and the generation time of the immediately-preceding location data $q_{i0}/2$" than the visit duration in the first embodiment (the duration indicated by a dashed line in Fig. 13).

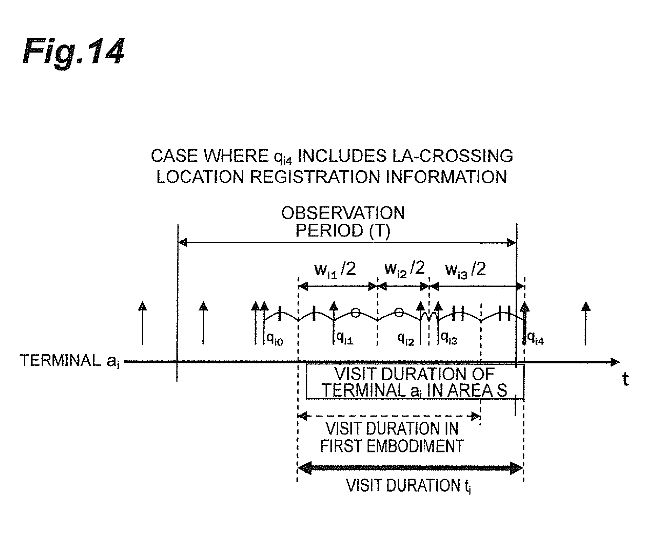

Furthermore, as shown in Fig. 14, the location data $q_{i4}$ is assumed to include the LA-crossing location registration information and it will be referred to hereinafter as "LA-crossing location registration information $q_{i4}$". In this case, it can be determined that the terminal $a_i$ leaves the sector S at a time of generation of the LA-crossing location registration information $q_{i4}$. For this reason, when the feature amount $w_{i3}$ is calculated on the location data $q_{i3}$ immediately preceding the LA-crossing location registration information $q_{i4}$, the feature amount $w_{i3}$ on the location data $q_{i3}$ becomes longer by "difference between the generation time of the location data $q_{i3}$ and the generation time of the immediately-following LA-crossing location registration information $q_{i4}/2$". Namely, the visit duration $t_i$ in which the terminal $a_i$ is located in the sector S during the observation period is a duration indicated by a thick solid line in Fig. 14, which is longer by "difference between the generation time of the location data $q_{i3}$ and the generation time of the immediately-following LA-crossing location registration information $q_{i4}/2$" than the visit duration in the first embodiment (the duration indicated by a dashed line in Fig. 14).

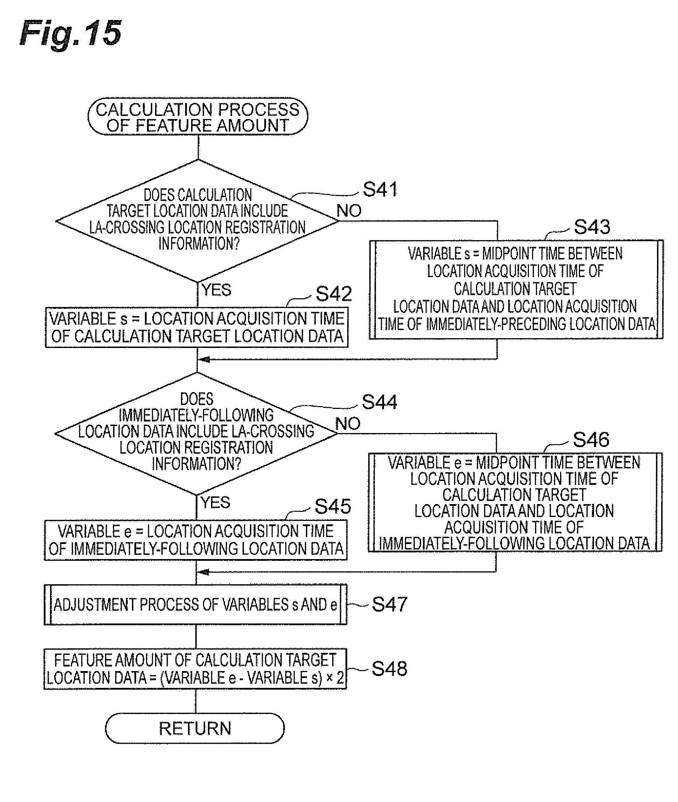

The feature amount calculation process based on the second conception of the number-of-terminals estimation as described above will be described using Fig. 15. The location data as a target for calculation of feature amount will be referred to hereinafter as "calculation target location data."

As shown in Fig. 15, the feature amount calculation unit 17 first determines whether or not the calculation target location data includes the LA-crossing location registration information, for example, by service class information included in the calculation target location data (step S41). In this step, when the calculation target location data includes the LA-crossing location registration information, the feature amount calculation unit 17 sets the location acquisition time of the calculation target location data to a first variable s for calculation of feature amount (which will be referred to hereinafter as "variable s") (step S42); when the calculation target location data does not include the LA-crossing location registration information, the feature amount calculation unit 17 sets a midpoint time between the location acquisition time of the calculation target location data and the location acquisition time of the immediately-preceding location data to the variable s (step S43).

Next, the feature amount calculation unit 17 determines whether or not the immediately-following location data includes the LA-crossing location registration information, for example, by service class information included in the immediately-following location data (step S44). In this step, when the immediately-following location data includes the LA-crossing location registration information, the feature amount calculation unit 17 sets the location acquisition time of the immediately-following location data to a second variable e for calculation of feature amount (which will be referred to hereinafter as "variable e") (step S45); when the immediately-following location data does not include the LA-crossing location registration information, the feature amount calculation unit 17 sets a midpoint time between the location acquisition time of the calculation target location data and the location acquisition time of the immediately-following location data to the variable e (step S46). It is not essential to perform the determination processes in steps S41, S44 above on the basis of the service class information, but they may be performed based on other information. For example, it is also possible to adopt a scheme in which area information indicative of ranges of location registration areas is preliminarily retained and the determination processes are carried out based on the location information of the calculation target location data and the immediately-following location data, and the area information.

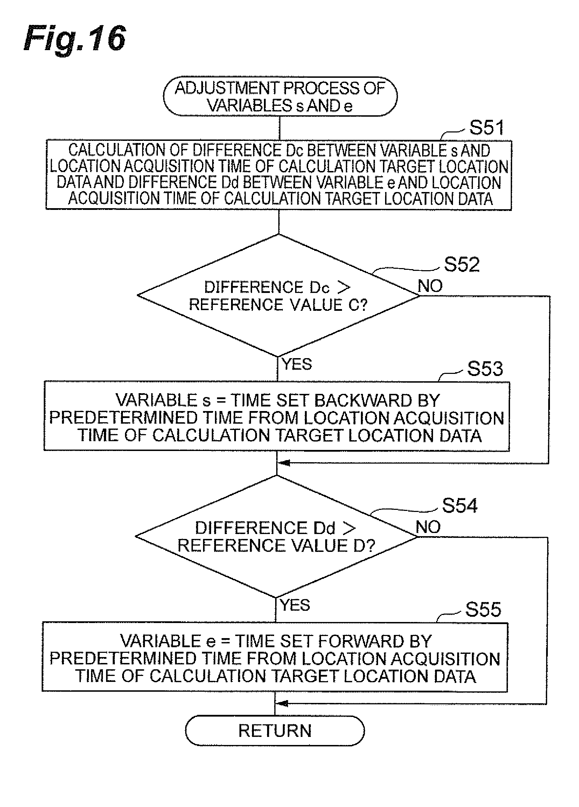

Next, the feature amount calculation unit 17 performs an adjustment process of the variables s, e shown in Fig. 16 (step S47). It is assumed herein that the location acquisition time of the calculation target location data is t1, a reference value C (e.g., 0.5 hour) is defined as a predetermined reference value of a reference to determine that the variable s is an abnormal value, and a reference value D (e.g., 0.5 hour) is defined as a predetermined reference value of a reference to determine that the variable e is an abnormal value.

The feature amount calculation unit 17 calculates a difference Dc between the variable s and the time t1 and a difference Dd between the variable e and the time t1 (step S51 in Fig. 16). Then the feature amount calculation unit 17 determines whether the difference Dc between the variable s and the time t1 is larger than the predetermined reference value C (e.g., 0.5 hour) (step S52); if the difference Dc is larger than the reference value C, the feature amount calculation unit 17 sets a time set backward by a predetermined time (e.g., 0.5 hour) from the time t1, to the variable s (step S53). Next, the feature amount calculation unit 17 determines whether the difference Dd between the variable e and the time t1 is larger than the predetermined reference value D (e.g., 0.5 hour) (step S54); if the difference Dd is larger than the reference value D, the feature amount calculation unit 17 sets a time set forward by a predetermined time (e.g., 0.5 hour) from the time t1, to the variable e (step S55). By carrying out this adjustment process of the variables s, e, when the acquisition time interval of location data becomes abnormally long because of the mobile terminal 100 being located in an out-of-service area or because of the mobile terminal 100 being in a power-off mode, it is feasible to prevent the abnormally long acquisition time interval from excessively affecting the calculation result.

Next, returning to Fig. 15, the feature amount calculation unit 17 calculates a value of "2 $\times$ (variable e - variable s)" as a feature amount on the calculation target location data (step S48). The feature amount on the calculation target location data is obtained through the above processing.

The second embodiment described above can obtain the feature amount with high accuracy while taking account of the point that when at least one of the calculation target location data and the immediately-following location data includes the LA-crossing location registration information, the entrance into the sector S or the exit from the sector S is determined to have occurred at the time of generation of the LA-crossing location registration information.

The feature amount calculation technique described in the second embodiment is also applicable to "the case where the feature amounts are calculated by narrowing down the location data to the observation target location data and where the number of terminals is estimated by the feature amounts obtained," and to "the case where the feature amounts are preliminarily calculated for all pieces of the location data and where the number of terminals is estimated using the feature amounts on the observation target location data among them."

Next, a modification example about the feature amount will be described. The aforementioned first and second embodiments showed the examples in which the time difference between the preceding and following location data (i.e., the time difference between the second location data (immediately-preceding location data) and the third location data (immediately-following location data)) before and after the location data as a target for calculation of the feature amount (first location data) was calculated as the feature amount on the first location data. Expressing this by an equation, the feature amount can be expressed by Equation (7) below. The below equation (7) is a modification of the aforementioned equation (4) and is equivalent to Equation (4) (namely, there is no change in the conception of Equation (4)).

$$w_{ij} = u_{i(j+1)} - u_{i(j-1)} \qquad (7)$$

The present modification example shows another variation of the feature amount calculation method in the feature amount calculation unit 17.

In the present modification example, when the feature amount calculation unit 17 calculates the feature amount on the first location data, it takes account of type information (e.g., below-described generation factor (generation timing) of location data) on the second location data and the third location data. Specifically, the feature amount calculation unit 17 calculates a value of a multiplication of the time difference between the third location data and the first location data by a correction factor $\alpha$ corresponding to the type information of the third location data (generation factor herein) and calculates a value of a multiplication of the time difference between the first location data and the second location data by a correction factor $\beta$ corresponding to the type information of the second location data (generation factor herein). However, instead of the above factors, the feature amount calculation unit 17 may determine the correction factor $\alpha$ or $\beta$ according to the type information of the first location data or may determine the correction factor $\beta$ according to the type information of the first and second location data and determine the correction factor $\alpha$ according to the type information of the first and third location data. Then the feature amount calculation unit 17 defines a value obtained by adding the results of these multiplications, as the feature amount on the first location data. When the feature amount calculation process in the feature amount calculation unit 17 is expressed by an equation, it is represented by Equation (8) below.

$$w_{ij} = \alpha(u_{i(j+1)} - u_{ij}) + \beta(u_{ij} - u_{i(j-1)}) \qquad (8)$$

For example, when the location data is the location registration information, the type information about the second location data and the third location data can be information about the generation factor of the location registration information, and this information about the generation factor is included in the generated location registration information. Examples of such generation factors of location registration information include a crossing of a terminal across a boundary of a location registration area, generation based on location registration performed at periodic intervals, execution of an attachment process by a power-on operation of a terminal or the like, execution of a detachment process by a power-off operation of a terminal or the like, and so on, and set values of the correction factors $\alpha$ and $\beta$ are preliminarily defined corresponding to these generation factors. Then the feature amount calculation unit 17 can set the correction factor $\alpha$ on the third location data in accordance with the information about the generation factor of the third location data and set the correction factor $\beta$ on the second location data in accordance with the information about the generation factor of the second location data. The correction factors $\alpha$, $\beta$ both may be preliminarily determined as values of not less than 0 and not more than 2. However, this numerical range is not essential.

For example, in the case of the location registration information the generation timing of which is irrespective of the location of the terminal like the location registration information based on location registrations performed at periodic intervals, expectations of time when the terminal has been located in a current sector are considered to be the same before and after generation of the location registration information. On the other hand, when the location registration information is one generated because of a crossing of a terminal across a location registration area boundary, it can be determined that the terminal has not been located in the current sector yet, at least before generation of the pertinent location registration information. For this reason, a duration in which the terminal has been located in the current sector before generation of the pertinent location registration information can be considered to be 0, and when the type information (generation factor) of the first location data is "a crossing across a location registration area boundary," the correction factor $\beta$ in above Equation (8) (i.e., the correction factor $\beta$ about the time difference from the immediately-preceding location data) can be set to 0. This allows the device to calculate the feature amount better agreeing with the actual condition. When the type information (generation factor) of the first location data is "a crossing across a location registration area boundary" in this manner, the calculation of the feature amount with the correction factor $\beta$ of 0 can achieve the same effect as in the aforementioned second embodiment.

As described above, when the feature amount calculation unit 17 calculates the feature amount on the target location data (first location data), it corrects the time differences from the second location data and from the third location data in accordance with the type information on the second and third location data (generation factors of the location data as an example) being the preceding and following location data before and after the first location data, and calculates the feature amount using the corrected time differences. This allows the device to calculate the feature amount more accurately, based on the type information of the location data.

In all of the aforementioned embodiments the device may be configured to perform an unidentifiability securing process for removing information with individual identifiability from the location data and use the location data after the unidentifiability securing process. For example, the configurations of Fig. 2 and Fig. 11 may be modified to configurations wherein an unidentifiability securing means to perform the unidentifiability securing process is added between the location data acquisition unit 11 and the storage unit 12 and wherein this unidentifiability securing means performs the unidentifiability securing process including conversion into irreversible code by a one-way function, on the identification information (e.g., a phone number) included in the location data. The one-way function is used herein in order to prevent restoration from information after the conversion, and the one-way function to be used herein can be a keyed hash function based on the hash function recommended by national and international evaluation projects and evaluation organizations, for example. When a process using the attribute information of a user of a mobile terminal is carried out, the unidentifiability securing means may perform the unidentifiability securing process including the conversion into irreversible code by the one-way function, on an individual-identifiable number (e.g., a phone number) in the attribute information, prior to the pertinent process. Furthermore, the unidentifiability securing means may delete name information in the attribute information, replace date-of-birth information with age information, and replace address information with "address information of numbered subdivision address without street number information". Since the unidentifiability securing process by the unidentifiability securing means as described above can remove the information with individual identifiability from the location data and the attribute information, it can prevent such trouble that an individual is identified from the location data or the attribute information.

List of Reference **Signs**

1: communication system; 10: number-of-terminals estimation device; 11: location data acquisition unit; 12: storage unit; 13: observation period acquisition unit; 14: observation area acquisition unit; 15: first presence count estimation unit; 16: signal removal unit; 17: second presence count estimation unit; 18: third presence count estimation unit; 19: output unit; 21: population estimation unit; 31: observation target acquisition unit; 32: preceding and following location data acquisition unit; 33: feature amount calculation unit; 33A: feature amount storage unit; 34: number-of-terminals estimation unit; 100: mobile terminal; 200: BTS; 300: RNC; 400: exchange; 500: management center; 501: social sensor unit; 502: peta-mining unit; 503: mobile demography unit; 504: visualization solution unit; 700: various processing node.

**Claims**

1. A number-of-terminals estimation device comprising:

   a location data acquisition unit for acquiring location data which are a collection of multiple pieces of location information including location registration information;

a first presence count estimation unit for estimating the number of terminals located in an observation area during an observation period, as a first presence count, based on the location data acquired by the location data acquisition unit;

an extraction unit for extracting location data in accordance with a type of location data, from the location data acquired by the location data acquisition unit;

a second presence count estimation unit for estimating the number of terminals located in the observation area during the observation period, as a second presence count, based on the extracted location data; and

a third presence count estimation unit for estimating the number of terminals located in the observation area during the observation period, as a third presence count, based on one or both of the first presence count obtained by the first presence count estimation unit and the second presence count obtained by the second presence count estimation unit.

2. A number-of-terminals estimation device comprising:

a location data acquisition unit for acquiring location data which are a collection of multiple pieces of location information including location registration information;

a first presence count estimation unit for estimating the number of terminals located in an observation area during an observation period, as a first presence count, based on the location data acquired by the location data acquisition unit;

a signal removal unit for removing location registration information generated due to a crossing of a terminal across a location registration area boundary, from the location data acquired by the location data acquisition unit, to obtain location data after removal;

a second presence count estimation unit for estimating the number of terminals located in the observation area during the observation period, as a second presence count, based on the location data after removal obtained by the signal removal unit; and

a third presence count estimation unit for estimating the number of terminals located in the observation area during the observation period, as a third presence count, based on one or both of the first presence count obtained by the first presence count estimation unit and the second presence count obtained by the second presence count estimation unit.

3. The number-of-terminals estimation device according to claim 1 or 2, wherein the third presence count estimation unit estimates an error of the number of terminals caused by a crossing of a terminal across a location registration area boundary, based on the first presence count and the second presence count.

4. The number-of-terminals estimation device according to any one of claims 1 to 3, wherein the third presence count estimation unit estimates the third presence count by switching the presence count as a basis of estimation for each observation area, among the first presence count only, the second presence count only, and, both of the first and second presence counts.

5. The number-of-terminals estimation device according to any one of claims 1 to 3, wherein the third presence count estimation unit estimates, as the third presence count, the number of terminals corresponding to a predetermined proportional division point between the first presence count and the second presence count.

6. The number-of-terminals estimation device according to any one of claims 1 to 3, wherein the third presence count estimation unit estimates the third presence count as follows:

when the first presence count is not less than the second presence count, the third presence count estimation unit estimates the third presence count to be the number of terminals corresponding to a predetermined proportional division point between the first presence count and the second presence count;

when the first presence count is less than the second presence count, the third presence count estimation unit estimates the third presence count to be the second presence count.

7. The number-of-terminals estimation device according to any one of claims 1 to 6, wherein the location data includes identification information to identify a terminal and location acquisition time information when the location information is acquired, associated with each piece of location information, and

wherein both or one of the first presence count estimation unit and the second presence count estimation unit includes:

a preceding and following location data acquisition unit for, concerning a target location data, acquiring location acquisition time information of location data immediately preceding the target location data and location acquisition time information of location data immediately following the target location data, out of location data including the same identification information as the target location data;

a feature amount calculation unit for calculating a feature amount on the target location data, based on at least two of the location acquisition time information of the immediately-preceding location data, the location acquisition time information of the target location data, and the location acquisition time information of the immediately-following location data;

an observation target acquisition unit for acquiring, as observation target location data, one or more pieces of location data including location acquisition time information after an observation start time and before an observation end time about an observation period to be observed and including location information associated with observation area information about an observation area to be observed; and

a number-of-terminals estimation unit for estimating the number of terminals located in the observation area during the observation period, based on the feature amount on the observation target location data and a length of the observation period being a difference between the observation start time and the observation end time.

8. The number-of-terminals estimation device according to claim 7, wherein the feature amount calculation unit operates as follows:

the feature amount calculation unit makes a determination on whether or not the target location data includes location registration information generated due to a crossing across a location registration area boundary and a determination on whether or not the immediately-following location data includes location registration information generated due to a crossing across a location registration area boundary;

the feature amount calculation unit calculates the feature amount on the target location data, using at least two of the location acquisition time information of the target location data, the location acquisition time information of the immediately-preceding location data, and the location acquisition time information of the immediately-following location data, according to the result of the determination on whether or not the target location data includes location registration information generated due to a crossing across a location registration area boundary and the result of the determination on whether or not the immediately-following location data includes location registration information generated due to a crossing across a location registration area boundary.

9. The number-of-terminals estimation device according to claim 8, wherein the feature amount calculation unit operates as follows:

when the target location data includes the location registration information generated due to the crossing across the location registration area boundary, the feature amount calculation unit sets a location acquisition time of the target location data to a first variable;

when the target location data does not include the location registration information generated due to the crossing across the location registration area boundary, the feature amount calculation unit sets a midpoint time between the location acquisition time of the target location data and the location acquisition time of the immediately-preceding location data to the first variable;

when the immediately-following location data includes the location registration information generated due to the crossing across the location registration area boundary, the feature amount calculation unit sets a location acquisition time of the immediately-following location data to a second variable;

when the immediately-following location data does not include the location registration information generated due to the crossing across the location registration area boundary, the feature amount calculation unit sets a midpoint time between the location acquisition time of the target location data and the location acquisition time of the immediately-following location data to the second variable; and

the feature amount calculation unit calculates the feature amount on the target location data, based on a difference between the first variable and the second variable set.

10. The number-of-terminals estimation device according to claim 8 or 9, wherein the feature amount calculation unit operates as follows:

when a difference between a location acquisition time of the target location data and a first variable is larger than a predetermined value, the feature amount calculation unit calculates the feature amount on the target location data, using as the first variable, a time set backward by a predetermined time from the location acquisition time of the target location data;

when a difference between the location acquisition time of the target location data and a second variable is larger than a predetermined value, the feature amount calculation unit calculates the feature amount on the target location data, using as the second variable, a time set forward by a predetermined time from the location acquisition time of the target location data.

11. The number-of-terminals estimation device according to any one of claims 1 to 10, further comprising:

a population estimation unit for estimating a population in the observation area during the observation period, based on the third presence count obtained by the third presence count estimation unit and a ratio of a presence count and a population in a predetermined area.

12. The number-of-terminals estimation device according to any one of claims 1 to 11, further comprising:

an observation period acquisition unit for acquiring observation period information including a set of an observation start time and an observation end time; and
an observation area acquisition unit for acquiring observation area information associated with one or more pieces of location information.

13. A number-of-terminals estimation method executed by a number-of-terminals estimation device, comprising:

a location data acquisition step of acquiring location data which are a collection of multiple pieces of location information including location registration information;
a first presence count estimation step of estimating the number of terminals located in an observation area during an observation period, as a first presence count, based on the location data acquired in the location data acquisition step;
an extraction step of extracting location data in accordance with a type of location data, from the location data acquired in the location data acquisition step;
a second presence count estimation step of estimating the number of terminals located in the observation area during the observation period, as a second presence count, based on the extracted location data; and
a third presence count estimation step of estimating the number of terminals located in the observation area during the observation period, as a third presence count, based on one or both of the first presence count acquired in the first presence count estimation step and the second presence count acquired in the second presence count estimation step.

14. A number-of-terminals estimation method executed by a number-of-terminals estimation device, comprising:

a location data acquisition step of acquiring location data which are a collection of multiple pieces of location information including location registration information;
a first presence count estimation step of estimating the number of terminals located in an observation area during an observation period, as a first presence count, based on the location data acquired in the location data acquisition step;
a signal removal step of removing location registration information generated due to a crossing of a terminal across a location registration area boundary, from the location data acquired in the location data acquisition step, to obtain location data after removal;
a second presence count estimation step of estimating the number of terminals located in the observation area during the observation period, as a second presence count, based on the location data after removal obtained in the signal removal step; and
a third presence count estimation step of estimating the number of terminals located in the observation area during the observation period, as a third presence count, based on one or both of the first presence count acquired in the first presence count estimation step and the second presence count acquired in the second presence count estimation step.

# Fig.1

1

VISUALIZATION
SOLUTION
UNIT — 504

MOBILE
DEMOGRAPHY
UNIT — 503

500

PETA-MINING
UNIT — 502

SOCIAL SENSOR UNIT — 501

VARIOUS PROCESSING
NODE          VARIOUS PROCESSING
NODE          } 700

EXCHANGE    EXCHANGE    EXCHANGE    } 400

RNC  RNC  RNC  RNC  RNC  RNC    } 300

BTS BTS BTS BTS BTS BTS BTS BTS BTS BTS BTS    } 200

} 100

*Fig.2*

NUMBER-OF-TERMINALS
ESTIMATION DEVICE

10

13
OBSERVATION
PERIOD ACQUISITION
UNIT

14
OBSERVATION
AREA ACQUISITION
UNIT

11
LOCATION DATA
ACQUISITION UNIT

12
STORAGE
UNIT

15
FIRST PRESENCE
COUNT ESTIMATION
UNIT

16
SIGNAL REMOVAL
UNIT

17
SECOND PRESENCE
COUNT ESTIMATION UNIT

18
THIRD PRESENCE
COUNT ESTIMATION UNIT

19
OUTPUT UNIT

*Fig.3*

15(17)

FIRST (SECOND) PRESENCE COUNT
ESTIMATION UNIT

OBSERVATION TARGET
ACQUISITION UNIT — 31

PRECEDING AND FOLLOWING
LOCATION DATA ACQUISITION UNIT — 32

FEATURE AMOUNT
CALCULATION UNIT — 33

NUMBER-OF-TERMINALS
ESTIMATION UNIT — 34

Fig.4

# Fig.5

OBSERVATION
PERIOD (T)

$w_{i1}/2$ , $w_{i2}/2$ , $w_{i3}/2$

$q_{i0}$ $q_{i1}$ $q_{i2}$ $q_{i3}$ $q_{i4}$

TERMINAL $a_i$

t

VISIT DURATION OF
TERMINAL $a_i$ IN AREA S

ESTIMATED VALUE OF
VISIT DURATION $t_i$

## Fig.6

```
            ( START )
                │
┌───────────────────────────────────────┐
│  ACQUISITION AND STORAGE OF LOCATION DATA  │──── S1
└───────────────────────────────────────┘
                │
┌───────────────────────────────────────┐
│    ESTIMATION OF FIRST PRESENCE COUNT    │──── S2
└───────────────────────────────────────┘
                │
┌───────────────────────────────────────┐
│      REMOVAL OF LOCATION REGISTRATION     │──── S3
│      INFORMATION DUE TO AREA CROSSING     │
└───────────────────────────────────────┘
                │
┌───────────────────────────────────────┐
│   ESTIMATION OF SECOND PRESENCE COUNT    │──── S4
└───────────────────────────────────────┘
                │
┌───────────────────────────────────────┐
│    ESTIMATION OF THIRD PRESENCE COUNT    │──── S5
└───────────────────────────────────────┘
                │
┌───────────────────────────────────────┐
│       OUTPUT OF NUMBER OF TERMINALS       │──── S6
└───────────────────────────────────────┘
                │
             ( END )
```

*Fig.7*

ESTIMATION PROCESS OF
FIRST (SECOND) PRESENCE COUNT

ACQUISITION OF OBSERVATION TARGET LOCATION DATA ～S11

ACQUISITION OF LOCATION DATA IMMEDIATELY PRECEDING AND IMMEDIATELY
FOLLOWING GIVEN PIECE OF OBSERVATION TARGET LOCATION DATA ～S12

CALCULATION OF FEATURE AMOUNT ～S13

S14
IS PROCESSING
COMPLETED FOR ALL PIECES
OF OBSERVATION TARGET
LOCATION DATA? NO

YES

ESTIMATION OF NUMBER OF TERMINALS ～S15

RETURN

## Fig.8

```
        ( CALCULATION PROCESS )
        (  OF FEATURE AMOUNT  )
                 │
┌────────────────────────────────────────────────────┐
│  CALCULATION OF DIFFERENCE Da BETWEEN LOCATION      │
│  ACQUISITION TIMES OF FIRST AND SECOND LOCATION     │ ～ S31
│ DATA AND DIFFERENCE Db BETWEEN LOCATION ACQUISITION │
│       TIMES OF FIRST AND THIRD LOCATION DATA        │
└────────────────────────────────────────────────────┘
                 │
                 ▼
        ◇ DIFFERENCE Da >  ◇ ─── S32
  NO ───◇ REFERENCE VALUE A? ◇
                 │
                YES
┌────────────────────────────────────────────────────┐
│ DEFINE TIME SET BACKWARD BY PREDETERMINED TIME FROM │
│  LOCATION ACQUISITION TIME OF FIRST LOCATION DATA,  │ ～ S33
│ AS LOCATION ACQUISITION TIME OF SECOND LOCATION DATA│
└────────────────────────────────────────────────────┘
                 │
                 ▼
        ◇ DIFFERENCE Db >  ◇ ─── S34
  NO ───◇ REFERENCE VALUE B? ◇
                 │
                YES
┌────────────────────────────────────────────────────┐
│ DEFINE TIME SET FORWARD BY PREDETERMINED TIME FROM  │
│  LOCATION ACQUISITION TIME OF FIRST LOCATION DATA,  │ ～ S35
│ AS LOCATION ACQUISITION TIME OF THIRD LOCATION DATA │
└────────────────────────────────────────────────────┘
                 │
                 ▼
┌────────────────────────────────────────────────────┐
│           CALCULATE DIFFERENCE BETWEEN              │
│    LOCATION ACQUISITION TIMES OF SECOND AND         │ ～ S36
│ THIRD LOCATION DATA, AS FEATURE AMOUNT ON FIRST LOCATION DATA │
└────────────────────────────────────────────────────┘
                 │
            ( RETURN )
```

# Fig.9

15(17)

FIRST (SECOND) PRESENCE COUNT ESTIMATION UNIT

31 — OBSERVATION TARGET ACQUISITION UNIT

32 — PRECEDING AND FOLLOWING LOCATION DATA ACQUISITION UNIT

33 — FEATURE AMOUNT CALCULATION UNIT

33A — FEATURE AMOUNT STORAGE UNIT

34 — NUMBER-OF-TERMINALS ESTIMATION UNIT

# *Fig.10*

ESTIMATION PROCESS OF
FIRST (SECOND) PRESENCE COUNT

ACQUISITION OF LOCATION DATA IMMEDIATELY PRECEDING AND IMMEDIATELY FOLLOWING GIVEN PIECE OF LOCATION DATA — S21

CALCULATION OF FEATURE AMOUNT — S22

STORAGE OF FEATURE AMOUNT — S23

IS PROCESSING COMPLETED FOR ALL PIECES OF LOCATION DATA? — S24 — NO

YES

ACQUISITION OF OBSERVATION PERIOD AND ACQUISITION OF OBSERVATION AREA INFORMATION — S25

ACQUISITION OF OBSERVATION TARGET LOCATION DATA — S26

ESTIMATION OF NUMBER OF TERMINALS — S27

RETURN

## Fig.11

10

NUMBER-OF-TERMINALS
ESTIMATION DEVICE

13

OBSERVATION
PERIOD ACQUISITION
UNIT

14

OBSERVATION
AREA ACQUISITION
UNIT

11

LOCATION DATA
ACQUISITION UNIT

12

STORAGE
UNIT

15

FIRST PRESENCE
COUNT ESTIMATION
UNIT

16

SIGNAL REMOVAL
UNIT

17

SECOND PRESENCE
COUNT ESTIMATION UNIT

18

THIRD PRESENCE
COUNT ESTIMATION UNIT

20

POPULATION
ESTIMATION UNIT

19

OUTPUT
UNIT

# Fig.12

### ESTIMATED PRESENCE COUNT AROUND LOCATION AREA BOUNDARY

SECTOR BOUNDARY

—◆— TRUE VALUES    —■— VALUES BASED ON
                        AREA CROSSING &
                        PERIODIC REGISTRATION

--▲-- VALUES BASED ON
      ONLY PERIODIC REGISTRATION

EP 2 672 433 A1

# Fig.13

CASE WHERE $q_{i1}$ INCLUDES LA-CROSSING
LOCATION REGISTRATION INFORMATION

OBSERVATION
PERIOD (T)

$w_{i1}/2$  $w_{i2}/2$  $w_{i3}/2$

$q_{i0}$   $q_{i1}$   $q_{i2}$   $q_{i3}$   $q_{i4}$

TERMINAL $a_i$

VISIT DURATION OF
TERMINAL $a_i$ IN AREA S

t

VISIT DURATION $t_i$

VISIT DURATION IN FIRST EMBODIMENT

# Fig.14

CASE WHERE $q_{i4}$ INCLUDES LA-CROSSING
LOCATION REGISTRATION INFORMATION

## Fig.15

CALCULATION PROCESS
OF FEATURE AMOUNT

S41
DOES CALCULATION
TARGET LOCATION DATA INCLUDE
LA-CROSSING LOCATION REGISTRATION
INFORMATION?

NO

S43
VARIABLE s = MIDPOINT TIME BETWEEN
LOCATION ACQUISITION TIME OF
CALCULATION TARGET
LOCATION DATA AND LOCATION ACQUISITION
TIME OF IMMEDIATELY-PRECEDING LOCATION DATA

YES
S42
VARIABLE s = LOCATION ACQUISITION TIME
OF CALCULATION TARGET LOCATION DATA

S44
DOES
IMMEDIATELY-FOLLOWING
LOCATION DATA INCLUDE LA-CROSSING
LOCATION REGISTRATION
INFORMATION?

NO

S46
VARIABLE e = MIDPOINT TIME BETWEEN
LOCATION ACQUISITION TIME OF
CALCULATION TARGET
LOCATION DATA AND LOCATION
ACQUISITION TIME OF
IMMEDIATELY-FOLLOWING LOCATION DATA

YES
S45
VARIABLE e = LOCATION ACQUISITION TIME
OF IMMEDIATELY-FOLLOWING LOCATION DATA

ADJUSTMENT PROCESS OF VARIABLES s AND e — S47

FEATURE AMOUNT OF CALCULATION TARGET
LOCATION DATA = (VARIABLE e - VARIABLE s) × 2 — S48

RETURN

37

## Fig.16

```
        ┌─────────────────────────────┐
        │ ADJUSTMENT PROCESS OF       │
        │ VARIABLES s AND e           │
        └─────────────────────────────┘
                       │
                                              S51
┌──────────────────────────────────────────────────────┐
│ CALCULATION OF DIFFERENCE Dc BETWEEN VARIABLE s AND    │
│ LOCATION ACQUISITION TIME OF CALCULATION TARGET LOCATION│
│ DATA AND DIFFERENCE Dd BETWEEN VARIABLE e AND LOCATION │
│ ACQUISITION TIME OF CALCULATION TARGET LOCATION DATA   │
└──────────────────────────────────────────────────────┘
                       │
                                           S52
              ╱────────────────╲        NO
             ╱  DIFFERENCE Dc >  ╲──────────────┐
             ╲  REFERENCE VALUE C?╱              │
              ╲────────────────╱                 │
                     │ YES                        │
                                      S53         │
┌──────────────────────────────────────────────┐ │
│ VARIABLE s = TIME SET BACKWARD BY              │ │
│ PREDETERMINED TIME FROM LOCATION ACQUISITION   │ │
│ TIME OF CALCULATION TARGET LOCATION DATA       │ │
└──────────────────────────────────────────────┘ │
                     │◄───────────────────────────┘
                                           S54
              ╱────────────────╲        NO
             ╱  DIFFERENCE Dd >  ╲──────────────┐
             ╲  REFERENCE VALUE D?╱              │
              ╲────────────────╱                 │
                     │ YES                        │
                                      S55         │
┌──────────────────────────────────────────────┐ │
│ VARIABLE e = TIME SET FORWARD BY               │ │
│ PREDETERMINED TIME FROM LOCATION ACQUISITION   │ │
│ TIME OF CALCULATION TARGET LOCATION DATA       │ │
└──────────────────────────────────────────────┘ │
                     │◄───────────────────────────┘
              ┌──────────────┐
              │   RETURN      │
              └──────────────┘
```

**INTERNATIONAL SEARCH REPORT**

| International application No. |
| --- |
| PCT/JP2012/051455 |

A. CLASSIFICATION OF SUBJECT MATTER
*G06Q10/00(2012.01)i, H04W4/02(2009.01)i, H04W60/00(2009.01)i*

According to International Patent Classification (IPC) or to both national classification and IPC

B. FIELDS SEARCHED

Minimum documentation searched (classification system followed by classification symbols)
G06Q10/00, H04W4/02, H04W60/00

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | WO 2010/116900 A1  (NTT Docomo Inc.),<br>14 October 2010 (14.10.2010),<br>entire text; all drawings<br>(Family: none) | 1-4,13,14<br>11,12<br>5-10 |
| Y<br>A | WO 2010/116938 A1  (NTT Docomo Inc.),<br>14 October 2010 (14.10.2010),<br>paragraph [0013]<br>(Family: none) | 11,12<br>5-10 |
| Y<br>A | JP 2003-122877 A  (Oki Electric Industry Co.,<br>Ltd.),<br>25 April 2003 (25.04.2003),<br>paragraph [0018]<br>(Family: none) | 11,12<br>5-10 |

| ☒ | Further documents are listed in the continuation of Box C. | ☐ | See patent family annex. |
| --- | --- | --- | --- |

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>    04 April, 2012 (04.04.12) | Date of mailing of the international search report<br>    17 April, 2012 (17.04.12) |
| --- | --- |
| Name and mailing address of the ISA/<br>    Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2012/051455

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2002-259581 A  (NEC Kasutamakkusu Kabushiki Kaisha),<br>13 September 2002 (13.09.2002),<br>paragraph [0030]<br>(Family: none) | 11,12<br>5-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010116903 A1

- JP 2010221456 A